# EUROPÄISCHE PATENTSCHRIFT

(11) **EP 2 177 255 B1**
(45) Veröffentlichungstag und Bekanntmachung des Hinweises auf die Patenterteilung: **27.06.2012**
(21) Anmeldenummer: 08166640.6
(22) Anmeldetag: 15.10.2008
(51) Int. Cl.: B01D 53/26, F28D 20/02

(54) **Kältetrockner**
Refrigerant type dryer
Dispositif de séchage à froid

(43) Veröffentlichungstag der Anmeldung: 21.04.2010
(73) Patentinhaber: Kaeser Kompressoren GmbH, 96450 Coburg (DE)
(72) Erfinder: Dering, Kristian Dipl.-Ing, 96450 Coburg (DE); Feisthauer, Michael Dipl.-Ing, 96484 Meeder (DE); Fredenhagen, Andreas Dr.-Ing, 96450 Coburg (DE); Foerster Andreas Dr.-Ing., 96487 Dörfles-Esbach (DE); Kobelt, Klaus-Ulrich, 96049 Bamberg (DE)
(74) Vertreter: Zech, Stefan Markus

(56) Entgegenhaltungen:
- EP-A- 1 081 445
- EP-A- 1 221 390
- DE-A1- 3 706 949
- DE-C1- 19 943 109
- NL-A- 8 401 592

## Beschreibung

Die Erfindung betrifft einen Kältetrockner, insbesondere Druckluftkältetrockner zur Trocknung eines gasförmigen Fluids unter Abkühlung des gasförmigen Fluids durch Einsatz eines Kältefluids sowie ein Verfahren zur Abkühlung eines gasförmigen Fluids in einem Kältetrockner, insbesondere einem Druckluftkältetrockner.

Kältetrockner sind an sich bekannt. Rein beispielhaft wird auf die EP 1 434 023 A2 verwiesen. Unter Kältetrocknung wird sowohl allgemein als auch gemäß der vorliegenden Erfindung ein an sich bekanntes Verfahren verstanden, bei dem kondensierbare Bestandteile aus einem Gasstrom mittels Kühlung dieses Gasstroms unter den jeweiligen Drucktaupunkt entfernt werden. Unter "Drucktaupunkt" versteht man entsprechend die Temperatur, auf die das gasförmige Fluid abgekühlt werden kann, ohne dass bereits Flüssigkeit auskondensiert. Kältetrockner werden insbesondere eingesetzt zur Trocknung von Druckluft, indem der mit Wasserdampf beladene Druckluftstrom gekühlt, der Wasserdampf durch den Kühlvorgang teilweise auskondensiert wird und das auskondensierte Wasser anschließend abgeschieden wird. Anwendungsbereiche für "getrocknete" Druckluft sind z. B. Frostschutz und Korrosionsschutz in Druckluftleitungen, druckluftbetriebenen Werkzeugen u. Ä.

Problematisch ist allerdings eine energieeffiziente Regelung der Kälteleistung eines Kältetrockners vorzusehen, da diese Regelung in Anpassung an variable Druckfluidvolumenströme, Druckfluidfeuchten und/oder Druckfluidtemperaturen erfolgen muss. Zur Regelung der Kälteleistung eines Kältetrockners sind bereits zahlreiche Verfahren bekannt, z. B. Regelungen mit Heißgasbypassventilen oder solche mit Drehzahlregelung des Kältemittelverdichters. Während die Heißgasbypassregelung eine relativ schlechte Energieeffizienz besitzt, ist bei der Drehzahlregelung meist der eingeschränkte Regelbereich problematisch.

Weiterhin gibt es Regelverfahren, die auf einer Ein-Aus-Schaltung des Kältemittelverdichters basieren, wobei die Druckfluidtemperatur am Eintritt an den Kondensatabscheider unabhängig von den Ein-Aus-Schaltungen des Kältemittelverdichters möglichst konstant gehalten werden soll, um einen möglichst konstanten Drucktaupunkt zu erreichen.

Um eine derartige Ein-Aus-Regelung des Kältemittelverdichters zu begünstigen oder erst zu ermöglichen, ist das Vorsehen eines Kältespeichers, der nach dem Stand der Technik beispielsweise in Form von Sand gegeben sein kann, bereits bekannt. In diesem Zusammenhang schlägt die EP 0 405 613 B1 sogar die Verwendung von Feuchtsand vor, um die Kapazität des Kältespeichers noch zu erhöhen.

Unter Energieeffizienz ist im vorliegenden Kontext ein günstiges Verhältnis zwischen der eingesetzten elektrischen Energie und der erhaltenen getrockneten Druckfluidmenge zu verstehen, wobei eine nahezu konstante Einhaltung eines spezifizierten Drucktaupunktes vorausgesetzt wird. Die Ein-Aus-Regelung ist bei sinnvoller konstruktiver Umsetzung sehr effizient, aber im Hinblick auf die Einhaltung einer konstanten Temperatur des Druckfluids am Eintritt des Kondensatabscheiders problematisch.

Bei der Ein-Aus-Regelung werden die Schaltungen des Kältemittelverdichters in Abhängigkeit der am Eintritt des Kondensatabscheiders gemessenen Druckfluidtemperatur oder anderer direkt oder indirekt damit im Zusammenhang stehender physikalischer Größen (z. B. Verdampfungsdruck, Temperatur im Speicher, Temperatur im Druckfluid-Kältemittel-Wärmetauscher, Drucktaupunkt des Druckfluids) ausgelöst. In manchen Fällen werden sogar mehrere dieser Größen gleichzeitig und/oder in einer vom Betriebszustand abhängigen Kombination oder Gewichtung zur Bestimmung der Schaltpunkte ausgewertet.

In allen Fällen muss eine an sich unerwünschte Hysterese der Druckfluidtemperatur am Eintritt in den Kondensatabscheider in Kauf genommen werden, die es nach Möglichkeit unter gleichzeitiger Begrenzung der Schalthäufigkeiten auf ein sinnvolles Maß zu minimieren gilt. Diese Hysterese wird im Wesentlichen durch folgende Faktoren bestimmt:
- Schalthäufigkeit des Kältemittelverdichters. Die Anzahl der Schaltungen ist lebensdauerkritisch bzw. lebensdauerbegrenzend für den Kältemittelverdichter und steigt mit abnehmender Hysterese der Schallpunkte;
- Kapazität des Kältespeichers;
- Temperaturgradienten zwischen dem verdampfenden Kältemittel, der thermischen Speichermasse und dem Druckfluidstrom beim be- bzw. entladen des Kältespeichers. Diese ergeben sich aus den auszutauschenden Wärmeströmen und den konstruktionsbedingten Wärmeübergängen und Wärmeüberleitungen. Die maximal austauschenden Wärmeströme liegen in der Größenordnung der Kälteleistung, wobei der Speicher einerseits bei eingeschaltetem Kältemittelverdichter und fehlendem Druckfluidstrom die gesamte Kälteleistung aufnehmen und andererseits bei ausgeschaltetem Kältemittelverdichter und vollem Druckfluidstrom auch wieder abgeben muss.

Um die unerwünschte Temperaturhysterese trotz begrenzter Schalthäufigkeit des Kältemittelverdichters möglichst klein zu halten, sind große Kapazitäten des Kältespeichers bei gleichzeitig guten Wärmeübergängen (das heißt geringen Grädigkeiten) zwischen dem verdampfenden Kältemittel, der thermischen Speichermasse im Kältespeicher und Druckfluidstrom notwendig, was konstruktiv widersprüchliche Anforderungen stellt und somit problematisch ist.

Da die räumlichen Temperaturgradienten bei Be- und Entladung des Kältespeichers entgegengesetzt laufen, addieren sich die Grädigkeiten bei Be- und Entladen in ihren Auswirkungen auf die Temperaturhysterese des Druckfluids am Eintritt des Kondensatabscheiders. Große Grädigkeiten beim Wärmeübergang sind zudem grundsätzlich nachteilig für die Energieeffizienz, weil mit großer "Entropieproduktion" verbunden.

Zur Reduzierung der Grädigkeiten sind große und effiziente Wärmetauscherflächen zwischen verdampfendem Kältemittel, thermischer Speichermasse und strömendem Druckfluid wünschenswert. In Kombination mit der ebenfalls erforderlichen großen Kapazität des Kältespeichers wirft dies Bauraum- und Anordnungsprobleme der Komponenten und Wärmetauscherflächen auf. Das Problem besteht somit darin, eine Bauform zu finden, mit der zugleich große effiziente Wärmetauscherflächen, kurze Wärmeleitungswege mit großem Wärmeleitungskoeffizienten und große bzw. großvolumige Kältespeicher bei insgesamt kleinem Bauraum und Bauaufwand erreicht werden können.

Zur Lösung dieses Problems schlägt die bereits genannte EP 0 405 613 B1 vor, die dort propagierte Speichermasse in Form von feuchtem Sand in die Zwischenräume von Rippenpaketen einzubetten, die von Rohrgruppen durchsetzt werden, in denen das Druckfluid bzw. das verdampfende Kältefluid strömt. Damit erreicht man einen akzeptablen Wärmeübergang zwischen verdampfendem Kältefluid und dem Druckfluid über die metallischen Wärmeleitungspfade der Rohre und Rippen, eine akzeptable Größe der Speichermasse und eine Einbettung der Speichermasse in direkter räumlicher Nähe und mit akzeptablem Wärmeübergang sowohl zum verdampfenden Kältefluid als auch zum strömenden Druckfluid. Je größer diese vorbekannten Kältetrockner zu dimensionieren sind, desto ungünstiger wird die Kostenstruktur infolge der notwendigen großen teuren Wärmetauscher, die zudem teure Rohstoffe wie Kupfer und Aluminium erfordern.

Die Schrift DE 199 43 109 C1, auf der der Oberbegriff der Ansprüche 1 und 23 besteht, verwendet als Kältespeichermasse Binäreis.

Die Aufgabe der vorliegenden Erfindung besteht demgegenüber darin, einen Kältetrockner sowie ein Verfahren zur Kältetrocknung eines gasförmigen Fluids in einem Kältetrockner vorzuschlagen, bei dem höhere Energieeffizienz, also ein günstigeres Verhältnis aus eingesetzter, insbesondere elektrischer Energie bezogen auf die getrocknete Druckfluidmenge erzielt wird.

Diese Aufgabe wird in vorrichtungstechnischer Hinsicht mit einem Kältetrockner nach den Merkmalen des Anspruches 1 und in verfahrenstechnischer Hinsicht mit den Merkmalen des Anspruches 24 gelöst. Vorteilhafte Weiterbildungen sind in den Unteransprüchen angegeben.

Ein Kerngedanke der vorliegenden Erfindung ist in den Kennzeichen der unabhängigen Ansprüche wiedergegeben

Insofern wird erfindungsgemäß vorgeschlagen, in einem Kältetrockner bzw. in einem Verfahren zur Kältetrocknung eines gasförmigen Fluids ein Speicherentladefluid bzw. allgemein ein Kältefluid vorzusehen, dass dem Kältetransport aus einem ggf. auch räumlich beabstandet liegenden Kältespeicher ermöglicht. Hierdurch ergeben sich wesentlich höhere Freiheiten hinsichtlich der Ausgestaltung und Dimensionierung des Kältespeichers sowie der Auswahl eines geeigneten Kältespeichermediums. Weiterhin kann hier mit dem vorgeschlagenen Kältetrockner bzw. dem hier vorgeschlagenen Verfahren die Energieeffizienz vor allem in Teillast- oder Nulllastsituationen entscheidend gestärkt werden.

Ein ähnliches Prinzip wurde im Bereich der Klimatechnik bereits vorgeschlagen. Es wird diesbezüglich auf die EP 1 221 390 verwiesen, in der eine Klimaanlage für ein Fahrzeug mit einem Kältespeicher beschrieben wird. Allerdings sind die Verhältnisse und Problemstellungen bei einem Kältetrockner, insbesondere Druckluftkältetrockner, nicht mit denjenigen bei einer Klimaanlage für ein Fahrzeug vergleichbar. Während es bei einer Klimaanlage für ein Fahrzeug gewünscht ist, bei Stillstand des Primärkreislaufes überhaupt noch eine Kühlleistung zu erzielen, kommt es bei einem Kältetrockner zunächst sowohl auf eine effiziente Kühlleistung einerseits als auch auf die Beibehaltung eines konstanten Drucktaupunktes andererseits an. Dies ist insbesondere bei der erwähnten Ein-Aus-Regelung ein nicht triviales Problem. Bei Druckfluid-Kältetrocknern ist nämlich der Regelbereich sehr eng, da die untere Grenze durch die Temperatur bestimmt wird, bei der das auszukondensierende Fluid erstarrt, bei Wasser also bei 0°C.

Der schwerkraftbedingte Antrieb des Entladekreislaufes kann je nach konkreter Ausgestaltung der Erfindung ausschließlich oder nicht ausschließlich sein, vorzugsweise ist er jedoch zumindest vorwiegend schwerkraftbedingt. Es können jedoch noch andere Antriebsmechanismen mitwirken, wie beispielsweise Kapillarkräfte oder eine Pumpe.

In einer weiter bevorzugten Ausgestaltung ist der Entladungskreislauf im Wesentlichen nur in den Betriebsphasen aktiv, in denen der oder die Kältemittelverdichter ausgeschaltet sind oder mit verminderter Leistung betrieben werden.

In einer bevorzugten Ausgestaltung des erfindungsgemäßen Kältetrockners stehen Primärkreislauf und Entladungskreislauf miteinander, insbesondere innerhalb des Druckfluid-Kältemittel-Wärmetauschers, zumindest fallweise in Fluidverbindung, so dass Speicherentladefluid des Entladungskreislaufes und Kühlfluid des Primärkreislaufes durch das gleiche Kühlfluid gebildet sind.

In einer fakultativen Ausgestaltung ist die Anordnung so getroffen, dass sich der Entladungskreislauf fallweise in Teilen des Primärkreislaufes ausbildet und somit durch die Strömungskanäle des Primärkreislaufes begrenzt ist.

In einer alternativen, ebenfalls fakultativen Ausgestaltung sind Primärkreislauf und Entladungskreislauf als voneinander fluidtechnisch getrennte Kreisläufe ausgebildet und stehen über einen Primärkreislauf-Transfer-Wärmetauscher miteinander in thermischer Wechselwirkung.

In einer vorteilhaften, konkreten Ausgestaltung des erfindungsgemäßen Kältetrockners kann der Kältespeicher wahlweise vom Druckfluid-Kältemittel-Wärmetauscher räumlich getrennt oder mit diesem zu einem gemeinsamen Bauteil integriert sein.

In einer bevorzugten Ausgestaltung ist die Anordnung so getroffen, dass das gasförmige Fluid in Strömungsrichtung vor und nach dem Druckfluid-Kältemittel-Wärmetauscher einen Luft-Luft-Wärmetauscher durchströmt derart, dass das im Druckfluid-Kältemittel-Wärmetauscher abgekühlte gasförmige Fluid das in den Druckfluid-Kältemittel-Wärmetauscher einströmende gasförmige Fluid vorkühlt, wobei der Druckfluid-Kältemittel-Wärmetauscher und der Luft-Luft-Wärmetauscher in einem gemeinsamen Bauteil integriert sind und wobei der speicherseitige Wärmetauscher als separates, getrenntes Bauteil oder zusammen mit dem Luft-Luft-Wärmetauscher und dem Druckfluid-Kältemittel-Wärmetauscher in einem gemeinsamen Bauteil realisiert ist.

In einer konkreten Ausgestaltung wird dem Kältespeicher über den speicherseitigen Wärmetauscher oder einen separaten Belade-Wärmetauscher in einem Beladezustand durch ein Speicherbeladefluid, das mit dem Speicherentladefluid identisch sein oder separat vorliegen kann, Wärme entzogen. Der Kältespeicher steht im Beladezustand über den speicherseitigen Wärmetauscher und/oder einen separaten Belade-Wärmetauscher mit dem Kältefluid des Primärkreislaufes zur Abkühlung des Kältespeichermediums bzw. zur Verringerung des Wärmeinhalts des Kältespeichermediums in Wirkverbindung.

In einer bevorzugten Weiterbildung der vorliegenden Erfindung ist die Wärmekapazität des Kältespeichers bzw. des Kältespeichermediums dadurch erhöht, dass das Kältespeichermedium in seinem Arbeitsbereich einen Phasenübergang vollzieht, insbesondere als so genannter Latentwärmespeicher ausgebildet ist. Konkret kann das Kältespeichermedium aus einem PCM-Material (Phase-Change-Material) bestehen, wobei es sich bei dem ausgenutzten Phasenübergang beispielsweise um einen Übergang fest-flüssig, aber auch um einen anderen reversiblen Übergang, wie beispielsweise eine reversible chemische Reaktion (Thermochemischer Wärmespeicher) bzw. um Absorptions- oder Desorptionsprozesse handeln kann. Konkret kann ein Kältespeichermedium auf Basis eines Salzes oder Parafin Verwendung finden.

In einer weiter bevorzugten Ausgestaltung ist das Kältespeichermedium so ausgewählt, dass sein Arbeitsbereich zwischen -8°C bis 4°C, vorzugsweise um etwa 2°C für Bauformen, bei denen der speicherseitige Wärmetauscher (20) und der Druckfluid-Kältemittel-Wärmetauscher (30) in einem gemeinsamen Bauteil (12) integriert sind bzw. um etwa - 3°Celsius für Bauformen, in denen der Kältespeicher (13) vom Druckfluid-Kältemittel-Wärmetauscher (30) räumlich getrennt ist, liegt. Gerade wenn wasserbelastete Druckluft getrocknet werden soll, besteht bei der Abkühlung die erhebliche Gefahr des Vereisens. Auf der anderen Seite soll für eine Einhaltung des spezifizierten Drucktaupunktes das Temperaturniveau des Kältespeichermediums auch nicht zu hoch liegen. In praktischen Versuchen hat sich gezeigt, dass der hier angegebene Temperaturbereich einen unproblematischen Betrieb des Kältetrockners bei gleichzeitig effektiver Kühlleistung erreicht.

In einer bevorzugten Ausgestaltung sind am speicherseitigen Wärmetauscher und/oder am ggf. zusätzlich vorgesehenen Belade-Wärmetauscher des Kältespeichers und/oder im Kältespeicher selbst Mittel zur Erhöhung der Wärmeleitfähigkeit vorgesehen, um eine möglichst effiziente Ankopplung des Speicherentlade- und/oder Speicherbeladefluids an das Kältespeichermedium des Kältespeichers zu bewirken. Diese Mittel können beispielsweise Riefen, Rippen, etc. im oder am Material des Wärmetauschers umfassen.

In einer weiteren möglichen Ausgestaltung sind die Mittel zur Erhöhung der Wärmeleitfähigkeit im Kältespeicher dadurch gebildet, dass Stoffe, Partikel oder Fasern mit hoher Wärmeleitfähigkeit im Kältespeichermedium zur Verbesserung der effektiven Wärmeleitfähigkeit im Kältespeichermedium eingelagert sind.

In einer weiteren möglichen Ausgestaltung ist im Primärkreislauf abschnittsweise eine Aufspaltung der Führung des Kältefluids in zwei parallel geführte Stränge, nämlich in einen druckluftseitigen Strang und einen speicherseitigen Strang, vorgesehen wobei der druckluftseitige Strang über den Druckfluid-Kältemittel-Wärmetauscher und der speicherseitige Strang über den Kältespeicher geführt sind. Dem druckluftseitigen Strang sowie dem speicherseitigen Strang kann jeweils ein separates Expansionsorgan und/oder entsprechende Einstellorgane zur Erzielung unterschiedlicher Verdampfungsdrücke zugeordnet sein.

Obwohl prinzipiell eine Abkühlung des Kältespeichers auch anderweitig möglich erscheint, erfolgt sie zweckmäßigerweise über das im Primärkreislauf geführte Kältefluid.

In einer besonders bevorzugten Ausgestaltung der vorliegenden Erfindung finden zur Verringerung des Wärmeinhalts des Kältespeichers durch das Kältefluid des Primärkreislaufes teilweise oder ausschließlich die Strömungswege des Entladungskreislaufes Verwendung.

Der Druckfluid-Kältemittel-Wärmetauscher kann so ausgebildet sein, dass das gasförmige Fluid und das Kältefluid des Primärkreislaufes im Gegenstromprinzip, im Gleichstromprinzip und/oder orthogonal zueinander geführt sind.

In einer möglichen, konkreten Ausgestaltung bilden durchgehende Kältefluidkanäle im Druckfluid-Kältemittel-Wärmetauscher Abschnitte des Entladungskreislaufes und erstrecken sich zumindest im Wesentlichen über die gesamte Höhe des aus dem speicherseitigen Wärmetauscher und dem Druckfluid-Kältemittel-Wärmetauscher gebildeten gemeinsamen Bauteil.

In einer möglichen, bevorzugten Ausgestaltung ist die Anordnung so getroffen, dass im Entladezustand ein insbesondere schwerkraftbedingter Kreislauf innerhalb der Kältefluidkanäle im Druckfluid-Kältemittel-Wärmetauscher dergestalt hervorgerufen wird, dass das Kältefluid im unteren Bereich der Kältefluidkanäle durch das zu kühlende gasförmige Fluid in den Druckluftkanälen Wärme aufnimmt, verdampft dieses Kältefluid mit erhöhtem Wärmeinhalt in Richtung zum Kältespeicher aufsteigt, dort Wärme abgibt und kondensiert und nach Wärmeabgabe innerhalb der Kältekanäle, insbesondere schwerkraftbedingt, wieder nach unten sackt, um dort erneut gasförmiges Fluid in den Druckluftkanälen abzukühlen.

In einer konkreten Weiterbildung können dabei Druckluftkanäle zur Führung des gasförmigen Fluids im Bereich des Druckfluid-Kältemittel-Wärmetauschers, vorzugsweise mit den Kältefluidkanälen alternierend, angeordnet sein und mit diesen in Wärmeleitverbindung stehen. In einer konkreten Weiterbildung ist der speicherseitige Wärmetauscher so ausgestaltet, dass das Kältespeichermedium im oberen Bereich des gemeinsamen Bauteils zwischen den Kältefluidkanälen untergebracht ist.

Bevorzugtermaßen kann das Kältespeichermedium in einer Mehrzahl abgeschlossener Kammern untergebracht sein, die jeweils als endseitig verschlossene Kanalabschnitte ausgebildet sind.

In einer alternativen, bevorzugten Ausgestaltung sind die Mehrzahl von Kammern, in denen das Kältespeichermedium untergebracht ist, über mindestens einen endseitig angeordneten Sammelkasten, der vorzugsweise eine oder mehrere Öffnungen zur Befüllung bzw. Entleerung umfasst, miteinander verbunden.

In einer weiteren, fakultativen Ausgestaltung ist das den speicherseitigen Wärmetauscher und den Druckfluid-Kältemittel-Wärmetauscher umfassende gemeinsame Bauteil als Plattenwärmetauscher oder als Aluminium-Block-Wärmetauscher ausgebildet, wobei sich ein Plattenwärmetauscher durch einen Aufbau einer Abfolge aufeinander angeordneter geeignet geformter Platten auszeichnet, wohingegen der Aluminium-Block-Wärmetauscher als Block ausgebildet ist bzw. aus mehreren zusammengesetzten Einzelblockabschnitten besteht.

Das erfindungsgemäße Verfahren kann in einer bevorzugten Weiterbildung vorsehen, dass bei Unterbrechung bzw. Abschaltung bzw. gestufter oder kontinuierlicher Leistungsreduktion des Primärkreislaufes eine Kühlung des gasförmigen Fluids ausschließlich oder teilweise durch den Kältespeicher bewirkt wird, wobei der konvektive Wärme- bzw. Kältetransport zwischen Kältespeicher und Druckfluid-Kältemittel-Wärmetauscher automatisch einsetzt oder - insbesondere durch Ventile - geregelt oder gesteuert wird.

Die Erfindung wird nachstehend auch hinsichtlich weiterer Merkmale und Vorteile anhand der Beschreibung von Ausführungsbeispielen und unter Bezugnahme auf die beiliegenden Zeichnungen näher erläutert.

Hierbei zeigen:
- Fig. 1: eine Prinzipskizze einer ersten Ausführungsform eines erfindungsgemäßen Käl- tetrockners
- Fig. 2: eine Prinzipskizze einer zweiten Ausführungsform eines erfindungsgemäßen Kältetrockners
- Fig. 3: eine Modifikation der Ausführungsform nach Fig. 2
- Fig. 4: eine Modifikation der Ausführungsform nach Fig. 2 oder 3
- Fig. 5: eine Prinzipskizze einer dritten Ausführungsform des erfindungsgemäßen Käl- tetrockners
- Fig. 6: eine Modifikation der Ausführungsform nach Fig. 5
- Fig. 7: eine Modifikation der Ausführungsform nach Fig. 5 oder 6
- Fig. 8: eine Modifikation der Ausführungsform nach Fig. 5, 6 oder 7
- Fig. 9: eine Prinzipskizze einer vierten Ausführungsform des erfindungsgemäßen Käl- tetrockners
- Fig. 10: eine Prinzipskizze einer weiteren Ausführungsform eines erfindungsgemäßen Kältetrockners
- Fig. 11a: eine Ausführungsform eines Block-Wärmetauschers in einer perspektivischen Teilschnittansicht von der Seite
- Fig. 11b: die Ausführungsform eines Block-Wärmetauschers gemäß Fig. 11a in einer Schnittansicht von oben
- Fig. 12a: eine Ausführungsform eines gelöteten Platten-Wärmetauschers in einer perspek- tivischen Teilschnittansicht
- Fig. 12b: die Ausführungsform eines gelöteten Platten-Wärmetauschers gemäß Fig. 12a in einer Schnittansicht von oben

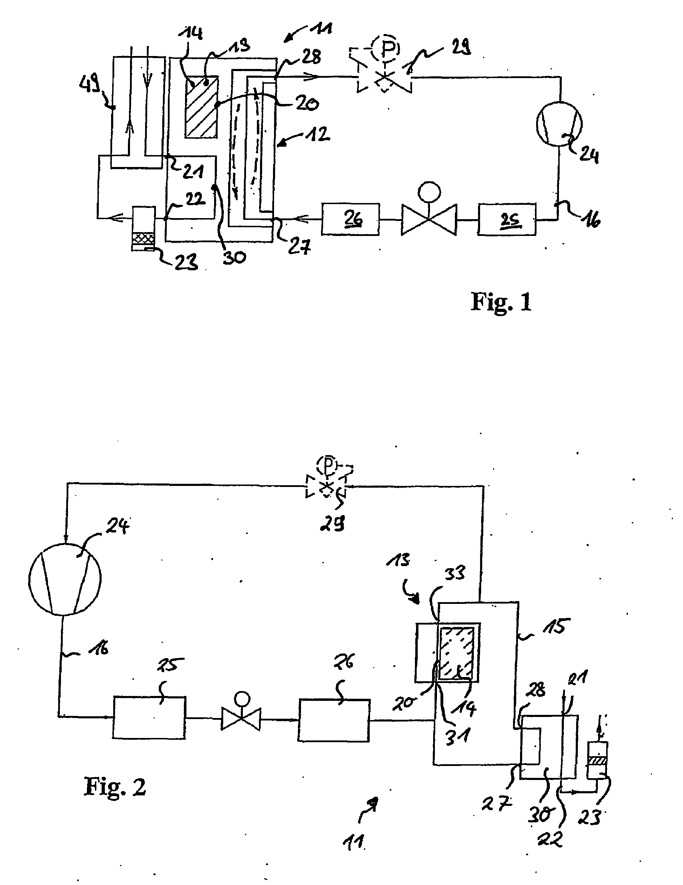

In Fig. 1 ist eine Prinzipskizze einer ersten Ausführungsform eines erfindungsgemäßen Kältetrockners 11, insbesondere zur Trocknung von Druckluft veranschaulicht. Zentrales Element des Kältetrockners 11 ist ein Druckfluid-Kältemittel-Wärmetauscher (30), der zunächst einen Drucklufteintritt 21 sowie einen Druckluftaustritt 22 umfasst, also von einem Strom von zu trocknender Druckluft, die auch in einer Mehrzahl von vorliegend nicht gezeigten Druckluftkanälen geführt werden kann, durchströmt wird. Stromabwärts des Druckluftaustritts 22 des Druckfluid-Kältemittel-Wärmetauschers 30 schließt sich in an sich bekannter Weise ein Kondensatabscheider 23 an, der die durch die Abkühlung im Druckfluid-Kältemittel-Wärmetauscher 30 auskondensierte Flüssigkeit aus dem Druckluftstrom abscheidet. Der Druckluftstrom wird dann weiteren Anwendungen, die trockene Druckluft erfordern, zur Verfügung gestellt. Weiter umfasst die vorliegende Ausführungsform einen Luft-Luft-Wärmetauscher 49, welcher den in den Drucklufteintritt 21 eintretenden Druckluftstrom durch Wärmeaufnahme durch den aus dem Druckluftaustritt 22 austretenden und getrockneten Druckluftstrom vorkühlt.

Die für den Trocknungsvorgang maßgebliche Abkühlung des Druckluftstroms erfolgt im Druckfluid-Kältemittel-Wärmetauscher 30 über ein in einem Primärkreislauf 16 geführtes Kältefluid. Der Primärkreislauf 16 umfasst als Antriebsorgan zunächst einen Kältemittelverdichter 24, der das Kältefluid in Richtung eines Verflüssigers 25 fördert. Ggf. geregelt oder gesteuert wird das Kältefluid stromab des Verflüssigers 25 durch ein Expansionsorgan 26 hindurch geführt, so dass in an sich bekannter Weise eine Abkühlung des Kältefluids bewirkt wird. Das Kältefluid tritt an einem Kältefluideingang 27 in den Druckfluid-Kältemittel-Wärmetauscher (30) ein, kühlt dort das Druckfluid ab und wird mit erhöhtem Wärmeinhalt anschließend in einen ggf. räumlich getrennten oder unmittelbar anschließenden speicherseitigen Wärmetauscher 20 geführt, der mit einem Kältespeicher 13 in thermischer Wechselwirkung steht und tritt an einem Kältefluidausgang 28 aus diesem wieder in Richtung auf den Kältemittelverdichter 24 aus. Optional kann zwischen dem Kältefluidausgang 28 und dem Kältemittelverdichter 24 noch ein Verdampfungsdruckregler 29 angeordnet sein.

Der Kältespeicher 13 ist bevorzugtermaßen in einem - schwerkraftbezogen betrachtet - über dem Druckfluid-Kältemittel-Wärmetauscher 30 liegenden Bereich angeordnet und kann konkret als Latentwärmespeicher ausgebildet sein.

Der Kältespeicher 13 umfasst also ein Kältespeichermedium 14, beispielsweise auf Basis eines Parafins.

Wenn nun der abzukühlende Druckluftstrom nicht die gesamte Kühlleistung des Primärkreislaufs 16 abruft, kann die überschüssige Kühlenergie in den Kältespeicher 13 überführt werden. In Fig. 1 ist dieser Vorgang lediglich vereinfacht dadurch angedeutet, dass der Kältespeicher 13 räumlich benachbart zu Teilen des Primärkreislaufes 16 angeordnet ist. So kann überschüssige Kühlenergie, die vom zu kühlenden Druckluftstrom nicht benötigt wird, im Kältespeicher 13 gespeichert werden.

Bedarfsweise, beispielsweise dann, wenn nur geringe Druckluftströme anliegen bzw. ausreichend Kühlenergie im Kältespeicher 13 gespeichert ist, kann der Primärkreislauf 16 auch abgeschaltet werden, was einen internen, konvektions- bzw. schwerkraftbedingten Kreislauf innerhalb von Teilen des Primärkreislaufes 16 (gekennzeichnet durch die beiden entgegen gesetzt gerichteten, gestrichelten Pfeile) dergestalt hervorruft, dass das Kältefluid in bezogen auf die Schwerkraftrichtung untere Bereiche des Primärkreislaufes 16 durch die zu kühlende Druckluft Wärme aufnimmt, verdampft dieses Kältefluid mit höherem Wärmeinhalt in Richtung zum Kältespeicher 13 hin aufsteigt, dort Wärme abgibt und kondensiert und nach Wärmeabgabe innerhalb des Primärkreislaufes 16 schwerkraftbedingt wieder nach unten sinkt, um dort erneut Druckluft abkühlen zu können. Die Teile des Primärkreislaufes 16, in welchen dieser Wärmeaustausch erfolgt, sind durch die beiden entgegen gesetzt gerichteten, gestrichelten Pfeile gekennzeichnet.

Die Ausführungsform nach Fig. 1 zeichnet sich dadurch aus, dass sowohl der speicherseitige Wärmetauscher 20 als auch der Druckfluid-Kältemittel-Wärmetauscher 30 in einer ein gemeinsames Bauteil 12 ausbildenden Wärmetauscheranordnung, integriert sind.

Bei Betrieb des Kältemittelverdichters 24 bzw. des Primärkreislaufs 16 durchfließt das Kältefluid sequentiell den als Druckfluid-Kältemittel-Wärmetauscher 30 definierten Bereich und anschließend den speicherseitigen Wärmetauscher 20. Die Durchströmungsrichtung hinsichtlich Kältefluideingang 27 und Kältefluidausgang 28 ist allerdings auch umkehrbar, so dass das gemeinsame Bauteil 12 bei Betrieb des Kältemittelverdichters 24 gewünschtenfalls auch in Gegenrichtung durchströmt werden kann.

Bei Stillstand des Kältemittelverdichters 24 bzw. des Primärkreislaufes 16 findet entlang der oben bezeichneten Abschnitte des Primärkreislaufes 16 ein Kältemittelkreislauf statt, bei dem im Bereich des Druckfluid-Kältemittel-Wärmetauschers 30 das Kältefluid verdampft und im oberen Bereich, also im Bereich des Kältespeichers 13 wieder kondensiert. Eine Verdampfung bzw. Kondensation kann alternativ auch durch eine thermische Konvektion des Kältefluids in einer einzigen Phase ersetzt sein.

Das den speicherseitigen Wärmetauscher 20 sowie den Druckfluid-Kältemittel-Wärmetauscher 30 umfassende gemeinsame Bauteil zeichnet sich insbesondere durch die folgenden Merkmale aus:
- Der Kältefluidweg erstreckt sich zumindest im Wesentlichen über die gesamte Höhe des Wärmetauschers, der das gemeinsame Bauteil 12 bildet;
- Der Kältefluidweg steht schwerkraftbezogen im unteren Bereich des das gemeinsame Bauteil 12 ausbildenden Wärmetauschers in thermischem Kontakt mit dem Druckluftweg;
- Der Kältefluidweg steht schwerkraftbezogen im oberen Bereich des das gemeinsame Bauteil ausbildenden Wärmetauschers in thermischem Kontakt mit dem Kältespeicher 13 bzw. dem Kältespeichermedium 14.

In Fig. 2 ist eine Prinzipskizze einer zweiten Ausführungsform eines erfindungsgemäßen Kältetrockners veranschaulicht, wobei in dieser Ausführungsform der speicherseitige Wärmetauscher 20 und der Druckfluid-Kältemittel-Wärmetauscher 30 räumlich getrennt ausgeführt sind und bei Betrieb des Kältemittelverdichters 24 bzw. des Primärkreislaufes 16 parallel durchströmt werden.

In dieser Anordnung ist ein unterer Anschluss 31 des speicherseitigen Wärmetauschers 20 oberhalb des Druckfluid-Kältemittel-Wärmetauschers 30 angeordnet und ist mit dessen unterem Anschluss, der den Kältefluideingang 27 definiert, verbunden. Ebenso ist ein oberer Anschluss 33 des speicherseitigen Wärmetauschers 20 mit einem oberen Anschluss des Druckfluid-Kältemittel-Wärmetauschers 30, der den Kältefluidausgang 28 definiert, verbunden.

Bei Stillstand des Kältemittelverdichters 24 kondensiert Kältefluid im speicherseitigen Wärmetauscher 20 und läuft über den unteren Anschluss 31 des speicherseitigen Wärmetauschers 20 in den Kältefluideingang 27 des Druckfluid-Kältemittel-Wärmetauschers 30 ein, wo es verdampft und über den Kältefluidausgang 28 des Druckfluid-Kältemittel-Wärmetauschers 30 an einen oberen Anschluss 33 des speicherseitigen Wärmetauschers 20 des Kältespeichers 13 zurückgeführt wird.

Sowohl bei der Ausführungsform nach Fig. 1 sowie auch bei der Ausführungsform nach Fig. 2 kann zur Vermeidung der Einfriergefahr durch zu niedrige Verdampfungsdrücke der bereits erwähnte Verdampfungsdruckregler 29 eingesetzt werden.

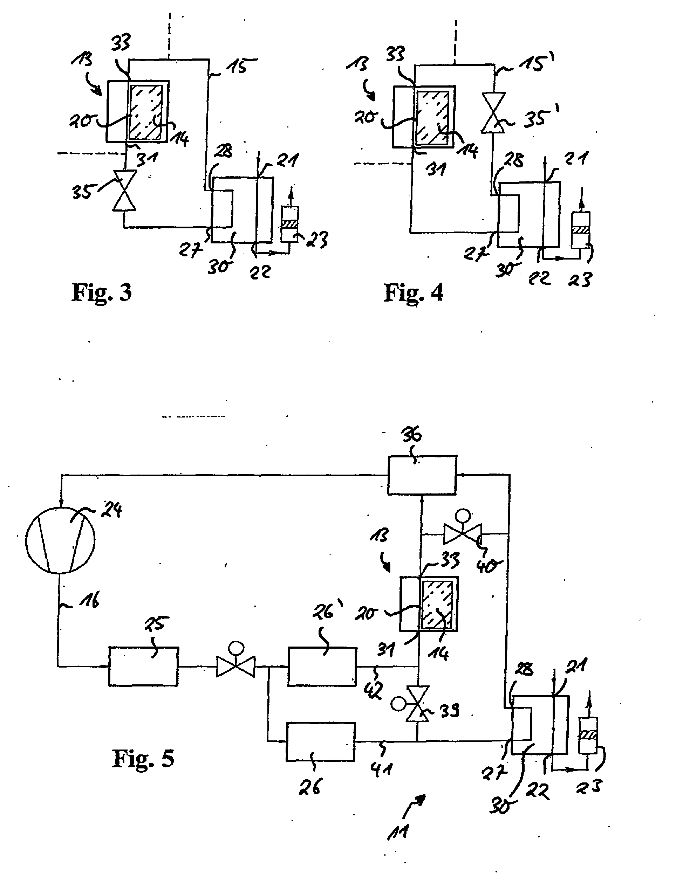

Bei der Ausführungsform nach Fig. 2 ist es weiterhin möglich, den Durchfluss des Kältefluids durch den Druckfluid-Kältemittel-Wärmetauscher 30 bei laufendem und/oder abgeschaltetem Kältemittelverdichter 24 durch weitere Regelorgane zu kontrollieren, um die Einhaltung des gewünschten Drucktaupunktes sicherzustellen. Hierzu kann beispielsweise (wie in Fig. 3 veranschaulicht) ein Ventil 35 vor dem Kältefluideingang 27 des Druckfluid-Kältemittel-Wärmetauschers 30 vorgesehen sein. Alternativ, vgl. die Ausführungsform nach Fig. 4, kann ein solches Ventil 35' auch am oder nach dem Kältefluidausgang 28 des Druckfluid-Kältemittel-Wärmetauschers 30 angeordnet sein. Die Ventile 35, 35' können entweder stetig verstellbar sein oder gepulst angesteuert werden. Als Regelparameter können hier die Temperatur im Druckfluid-Kältemittel-Wärmetauscher und/oder die Temperatur im Druckluftstrom, insbesondere am Drucklufteintritt 21 und/oder am Druckluftaustritt 22 und/oder der Drucktaupunkt der Druckluft verwendet werden.

In Fig. 5 ist eine nochmals abgewandelte Ausführungsform des erfindungsgemäßen Kältetrockners veranschaulicht. Die Anordnung ist hier so getroffen, dass im speicherseitigen Wärmetauscher 20 eine andere, insbesondere tiefere Verdampfungstemperatur als in dem Druckfluid-Kältemittel-Wärmetauscher 30 eingestellt wird. Dies ermöglicht eine effizientere Abkühlung des Kältespeichers 13, ohne dass im Druckfluid-Kältemittel-Wärmetauscher 30 für die Druckluft zu niedrige Temperaturen auftreten. Hierzu wird, wie aus Fig. 5 ersichtlich, das Kältefluid in einen druckluftseitigen Strang 41 und in einen speicherseitigen Strang 42 aufgeteilt und parallel durch zwei verschiedene Expansionsorgane 26, 26' geführt, und zwar ausgehend von einem ersten Expansionsorgan 26 an den Druckfluid-Kältemittel-Wärmetauscher 30 geführt. Parallel hierzu wird das Kältefluid durch das zweite Expansionsorgan 26' an den speicherseitigen Wärmetauscher 20 geführt. Die anteilsmäßige Aufteilung der Kältemittelströme wird durch Einstellorgane 36 erreicht.

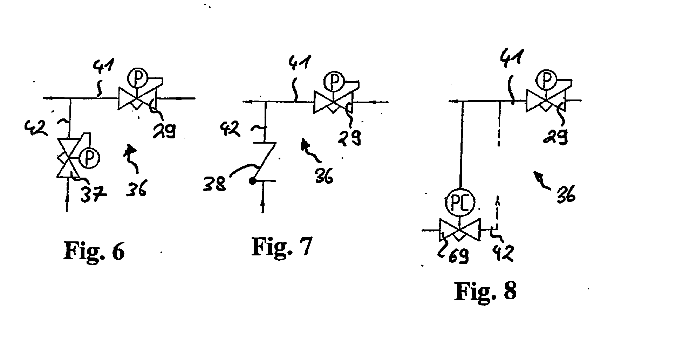

Beispiele hierfür sind in den Fig. 6, 7 und 8 veranschaulicht. Das Einstellorgan 36 ist in der Ausführungsform nach Fig. 6 wie folgt aufgebaut: Der Verdampfungsdruck im Druckfluid-Kältemittel-Wärmetauscher 30 wird durch einen Verdampfungsdruckregler 29 auf einem Mindestwert gehalten. Führt im Teillastbetrieb die Drosselung in diesem Verdampfungsdruckregler 29 dazu, dass der Ansaugdruck des Kältemittelverdichters 24 einen Ansprechdruck eines Startreglers 37, der im speicherseitigen Strang des Primärkreislaufes 16 stromab, das heißt am oder nach dem oberen Anschluss 33 des speicherseitigen Wärmetauschers 20 vorgesehen ist, unterschreitet, öffnet der genannte Startregler 37, so dass überschüssiges Kältefluid über den speicherseitigen Wärmetauscher 20 geführt wird und zur Abkühlung des Kältespeichers 13 eingesetzt wird.

In Fig. 7 ist eine hiervon abweichende Ausführungsform dargestellt. Hier ist im speicherseitigen Strang 42 des Primärkreislaufes 16 abstromseitig des speicherseitigen Wärmetauschers 20 ein Rückschlagventil 38 angeordnet. Der Aufbau entspricht also im Prinzip der Ausführungsform nach Fig. 6, wobei hier der Startregler 37 gemäß Fig. 6 durch ein Rückschlagventil 38 bzw. ein Differenzdruckventil ersetzt ist, so dass nicht der absolute Druck, sondern die Druckdifferenz zwischen Verdampfungsdruck im speicherseitigen Wärmetauscher 20 und Ansaugdruck des Kältemittelverdichters 24 für die Öffnung des Rückschlagventils 38 ausschlaggebend ist.

Eine weitere mögliche Ausführungsform für ein Einstellorgan 36 wird anhand von Fig. 8 veranschaulicht, wobei hier zunächst der Verdampfungsdruckregler 29 im druckluftseitigen Kältemittelstrang eine Drosselung bei Teillast bewirkt. Wenn durch diese Drosselung ein Schwellwert unterschritten wird, öffnet ein druckgesteuertes, elektrisches Expansionsventil 69, das insofern das Expansionsorgan 26' ersetzt, und gibt den Kältemittelweg durch den speicherseitigen Wärmetauscher 20 unter gleichzeitiger Expansion und Abkühlung des Kältefluids frei.

Unabhängig von der konkreten Ausbildung der Einstellorgane 36 wird in allen Varianten der in Fig. 5 veranschaulichten Ausführungsform ein Kreislauf analog der Ausführungsform nach Fig. 2 in Gang gesetzt, sobald der Primärkreislauf 16 bzw. der Kältemittelverdichter 24 gestoppt wird. In diesem Fall werden über Kreislaufventile 39, 40 der untere Anschluss 31 des speicherseitigen Wärmetauschers 20 mit dem Kältefluideingang 27 des Druckfluid-Kältemittel-Wärmetauschers 30 und dem Kältefluidausgang 28 des Druckfluid-Kältemittel-Wärmetauschers 30 mit dem oberen Anschluss 32 des speicherseitigen Wärmetauschers 20, wie schon anhand der Ausführungsform nach Fig. 2 beschrieben, verbunden. Es kann dann ein konvektionsbetriebener Kreislauf zwischen dem Kältespeicher 13 und dem Druckfluid-Kältemittel-Wärmetauscher 30 einsetzen, so dass der Kältespeicher 13 entladen und die Druckluft bei ausgeschaltetem Primärkreislauf 16 gleichermaßen gekühlt wird. Bevorzugtermaßen werden die Kreislaufventile 39, 40 gleichzeitig mit dem An- bzw. Abschalten des Kältemittelverdichters 24 geschaltet, das heißt beim Anschalten des Kältemittelverdichters 24 geschlossen und beim Abschalten des Kältemittelverdichters 24 geöffnet.

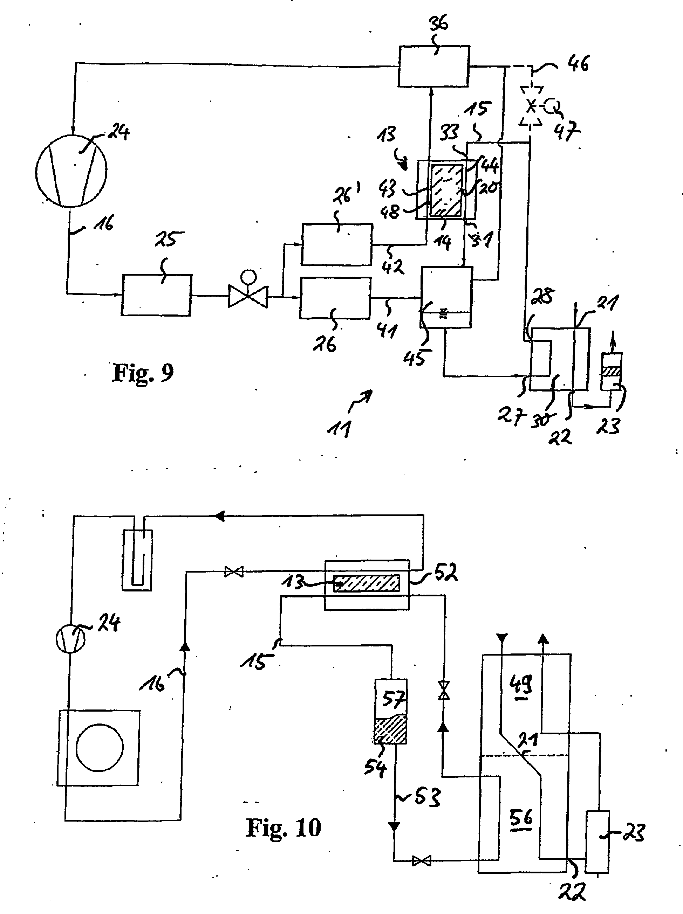

In Fig. 9 ist eine weitere Ausführungsform eines erfindungsgemäßen Kältetrockners dargestellt. Wie auch bei der Ausführungsform nach Fig. 5 erfolgt zunächst eine Aufspaltung des Kältefluidstroms in einen druckluftseitigen Strang 41 und in einen speicherseitigen Strang 42. Im druckluftseitigen Strang 41 ist auch hier ein Expansionsorgan 26 und im speicherseitigen Strang 42 ein Expansionsorgan 26' vorgesehen. Hierdurch ist es wiederum möglich, im speicherseitigen Wärmetauscher 20 ein anderes Verdampfungsdruckniveau als im Druckfluid-Kältemittel-Wärmetauscher 30 vorzusehen.

Der speicherseitige Wärmetauscher 20 ist in der hier vorgeschlagenen Ausführungsform mit zwei separaten Kältemittelwegen, nämlich einem Aufladungskältemittelweg 43 und einem Entladungskältemittelweg 44, der Teil des Entladungskreislaufes 15 ist, ausgebildet. Zwischen Aufladungskältemittelweg 43 und Kältespeichermedium 14 des Kältespeichers 13 wird somit ein Belade-Wärmetauscher 48 definiert. Im Unterschied zu den vorbeschriebenen Ausgestaltungen erfolgt somit Abkühlung und Erwärmen des Kältespeichermediums 14 in unterschiedlichen Bereichen des speicherseitigen Wärmetauschers 20. Dadurch können der Druckfluid-Kältemittel-Wärmetauscher 30 und der Entladungskältemittelweg 44 des speicherseitigen Wärmetauschers 20 in ständiger Verbindung stehen und es sind keine Absperrorgane, insbesondere nicht die anhand der Ausführungsform nach Fig. 5 erläuterten Kreislaufventile 39, 40 zwischen diesen notwendig. Der Kältefluidkreislauf bei Stillstand des Kältemittelverdichters 24 entspricht dem Kreislauf nach den Ausführungsformen gemäß Fig. 2 bzw. Fig. 5, wobei das auf dem Entladungskreislauf 15 aus dem Kältespeicher 13 in Richtung auf den Druckfluid-Kältemittel-Wärmetauscher 30 austretende Kältefluid durch einen Kältemittelsammler 45 strömt, der ebenfalls mit dem Expansionsorgan 26 in Fluidverbindung steht, so dass bei laufendem Primärkreislauf 16 Kältefluid aus dem Expansionsorgan 26 in den Kältemittelsammer 45 eintritt.

Um während des Abkühlens des Kältespeichers 13 einen Wärmeeintrag in den Kältespeicher 13 durch das Kondensieren des aus dem Druckfluid-Kältemittel-Wärmetauscher austretenden Kältefluids zu vermeiden, kann eine zusätzliche Kältemittelleitung 46 den oberen Anschluss 34 des Druckfluid-Kältemittel-Wärmetauschers 30 mit dem Einstellorgan 36 verbinden, wobei in dieser zusätzlichen Kältefluidleitung 46 ein Absperrorgan 47 vorgesehen sein kann. Durch das Öffnen des Absperrorgans 47 während der Verringerung des Wärmeinhalts Kältespeichers 13 strömt das Kältefluid des Druckfluid-Kältemittel-Wärmetauschers 30 nun direkt zum Einstellorgan 36 und von dort in den Kältemittelverdichter 24. Das Expansionsorgan 26' kann alternativ auch direkt an den Kältemittelsammler 45 angeschlossen werden.

In Fig. 10 ist eine weitere Ausführungsform eines erfindungsgemäßen Kältetrockners dargestellt. Im Gegensatz zu den bisher gezeigten Kältetrocknern umfasst der vorliegende Kältetrockner einen geschlossenen Zwischenkreislauf, welcher als von dem Primärkreislauf 16 fluidtechnisch getrennter Transferkreislauf 53 ausgeführt ist. Der Transferkreislauf 53 umfasst einen Primärkreislauf-Transfer-Wärmetauscher 52, sowie einen druckluftseitigen Wärmetauscher 56, welcher funktionsgemäß einem Druckfluid-Kältemittel-Wärmetauscher entspricht. Der Transferkreislauf 53 erlaubt einen indirekten Wärmeaustausch zwischen dem Primärkreislauf 16 und dem zu trocknenden Druckluftstrom, welcher optional auch in einem Luft-Luft-Wärmetauscher 49 bereits vor Eintritt in den Kältetrockner vorgekühlt werden kann. Bei der vorliegenden Ausführungsform ist der Kältespeicher 13 innerhalb des Primärkreislauf-Transfer-Wärmetauschers 52 integriert bzw. an diesen thermisch angekoppelt.

Der Primärkreislauf 16 umfasst vorliegend als Antriebsorgan einen Kältemittelverdichter 24. Der Antrieb kann jedoch durch weitere Antriebsorgane noch zusätzlich unterstützt werden. Im Betriebszustand durchströmt das Kältefluid des Primärkreislaufes 16 zur Wärmeaufnahme bzw. zur Kälteabgabe den Primärkreislauf-Transfer-Wärmetauscher 52 und entzieht dem Transferfluid 54 des Transferkreislaufes 53 Wärme. Das Transferfluid 54 wird nachfolgend in einem Transferfluidreservoir 57 gepuffert bzw. gesammelt. Die in dem zu trocknenden Druckluftstrom enthaltene Wärme wird in dem druckluftseitigen Wärmetauscher 56 an das Transferfluid des Transferkreislaufes 53 abgegeben, wodurch dieses wieder einen erhöhten Wärmegehalt aufweist. Dieser Transferkreislauf 53 läuft bei Kältemittelverdichterstillstand analog ab. Dabei gibt das Transferfluid im Transferwärmetauscher Wärme an das Speichermedium ab.

Vorzugsweise ist der Transferkreislauf 53 in Bezug auf den Primärkreislauf 16 und den Druckluftstrom derart angeordnet, dass er als schwerkraftbetriebener Konvektionskreislauf betrieben werden kann. Hierzu ist das Transferfluidreservoir 57 in Bezug auf die Schwerkraft oberhalb des druckluftseitigen Wärmetauschers 56 angeordnet, um eine konvektive Zirkulation des Transferfluids in dem Tranferkreislauf 53 zu ermöglichen. Als Transferfluid kann dasselbe Kältefluid wie im Primärkreislauf 16 verwendet werden.

Der Transferkreislauf 53 kann auch als interner Kreislauf innerhalb eines gemeinsamen Bauteils analog Fig. 1 ausgestaltet sein. Im oberen Bereich des Wärmetauschers sind dann Primärkreislauf, Transferkreislauf und Speicher in thermischem Kontakt.

Aufgrund des mehrstufigen Wärmetausches zwischen dem Primärkreislauf 16 und den Druckluft führenden Bereichen des Kältetrockners ist die zu erwartende Energieeffizienz gegenüber den vorher dargestellten Ausführungsformen des Kältetrockners relativ geringer, jedoch ist die Regelung des Kältetrockners einfacher und zuverlässiger. Weiterhin ergeben sich auch Vorteile gegenüber der in Fig. 1 gezeigten Lösung im Bezug auf die Konstanz des Drucktaupunktes, weil die Speichertemperatur tiefer gewählt werden kann.

In der in Fig. 10 dargestellten Ausführungsform des Kältetrockners ist der Transferkreislauf 53 mit Regelorganen versehen, um die Konstanz des Drucktaupunktes noch besser einhalten zu können. Es ist aber auch möglich, den Transferkreislauf 53 rein passiv, das heißt ohne separate Regelorgane auszubilden. Es versteht sich von selbst, dass auch in dieser Konstellation eine Pumpe zum Einsatz gelangen kann.

Figen. 11 a und 11b zeigen eine Ausführungsform eines Block-Wärmetauschers zur Trocknung von Druckluft in zwei unterschiedlichen Teilschnittansichten. Der gezeigte Block-Wärmetauscher ist wenigstens teilweise aus Metall, vorzugsweise aus Aluminium, gefertigt. Der gezeigte Block-Wärmetauscher entspricht hierbei in seiner Funktion einem Druckfluid-Kältemittel-Wärmetauscher mit einem integriertem speicherseitigen Wärmetauscher und bildet somit eine Ausführungsform eines gemeinsamen Bauteils 12 umfassend den Druckfluid-Kältemittel-Wärmetauscher 30 sowie den speicherseitigen Wärmetauscher 20.

Der Block-Wärmetauscher umfasst einen druckluftseitigen Wärmetauscher 62 (entsprechend dem Druckfluid-Kältemittel-Wärmetauscher 30 gemäß Fig. 1) mit einem Drucklufteinlass 58. Die in den druckluftseitigen Wärmetauscher 62 einströmende Druckluft wird auf eine Mehrzahl an Drucklufteintritte 59 aufgeteilt, und strömt in nachfolgende Druckluftpassagen 60. Die Druckluftpassagen 60 umfassend eine Vielzahl an einzelnen, allerdings nicht gegeneinander abgeschlossenen Druckluftkanälen 18, die durch ein Wärmeübertragungselement 67 in Form eines Wellbleches definiert sind. Das oder die Wärmeübertragungselemente 67 werden üblicherweise durch gefaltete Bleche gebildet. Die dadurch entstehenden Strömungskanäle können z. B. gerade oder wellenförmig geformt sein und Bohrungen, Schlitze oder Ausprägungen aufweisen. Zur Verbesserung des Wärmeübergangs bei der Durchströmung können die Elemente auch so gestanzt und gefaltet sein, dass hintereinander liegende versetzte Kanalabschnitte entstehen. Im Prinzip können die Elemente beliebig geformt sein, sofern sie die Wärmeübertragungsfläche vergrößern und die Durchströmung bei akzeptablem Druckverlust bzw. die Befüllung mit einem Speichermedium ermöglichen. Weitere Funktionen der Wärmeübertragungselemente können eine mechanische Stabilisierung und ggf. die Verbesserung des Wärmeübergangs aufgrund hervorgerufener-Turbulenzen bei strömenden Medien sein.

Unmittelbar angrenzend an die Druckluftpassagen 60 und durch Trennwandungen 66 von diesen getrennt sind Kältefluidpassagen 61 angeordnet, in welchen ein Kältefluid, etwa eines Primärkreislaufes, zur Wärmeaufnahme bzw. zum Wärmeübertrag vorgesehen ist. Auch die Kältefluidpassagen weisen jeweils ein Wärmeübertragungselemente 67 auf, welches in Form eines Wellbleches eine Vielzahl an gegeneinander jedoch nicht abgegrenzten Kältefluidkanälen 17 definiert.

Der druckluftseitige Wärmetauscher 62 ist nach oben durch eine Trennplatte 63 abgeschlossen, an welche sich nach oben ein kältespeicherseitiger Wärmetauscher 64 (entsprechend dem speicherseitigen Wärmetauscher 20 gemäß Fig. 1) anschließt. Der kältespeicherseitige Wärmetauscher 64 umfasst neben den Kältefluidpassagen 61, in welchen das Kältefluid des Primärkreislaufes strömt und welche den kältespeicherseitige Wärmetauscher 64 mit dem druckluftseitigen Wärmetauscher 62 fluidtechnisch verbinden, noch eine Mehrzahl an Kammern 19, welche ebenfalls durch ein Wärmeübertragungselement 67 weiter strukturiert sind bzw. Kammern 19. Die Strukturierung der Kammern 19 ist in Bezug auf ihre Längsausdehnung senkrecht zum Verlauf der Kältefluidkanäle 17 ausgerichtet. In den Kammern ist ein Kältespeichermedium vorgesehen, welches vorzugsweise ein Phasenübergangsmaterial ("phase change material", PCM) umfasst.

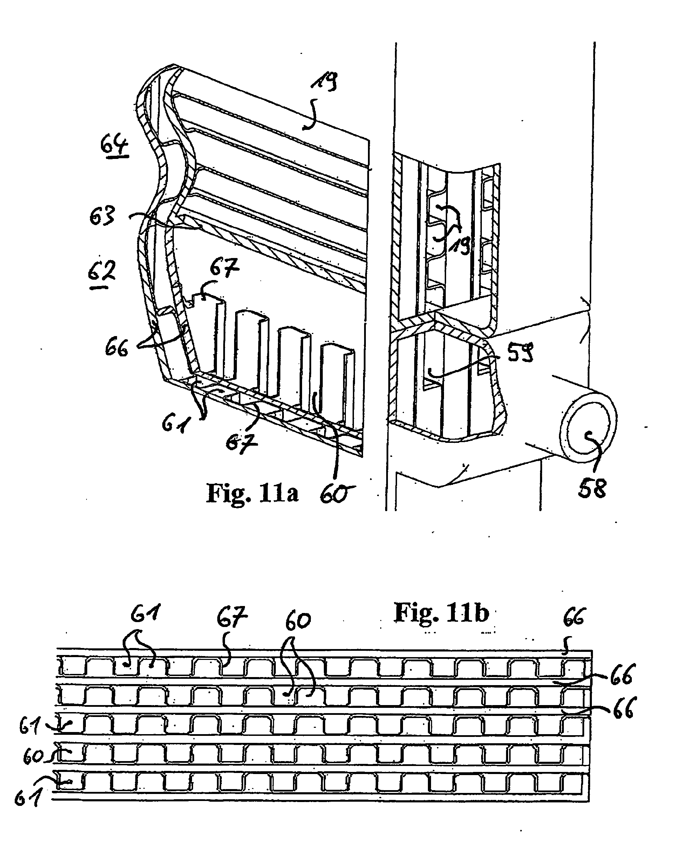

Fig. 11b zeigt einen Querschnitt durch den druckluftseitigen Wärmespeicher 62 von oben. Wie aus der Abbildung hervorgeht ist die Abfolge der Druckluftpassagen 60 und Kältefluidpassagen 61 alternierend. Beide Passagen sind durch die Trennwandungen 66 voneinandner getrennt. Zur Erhöhung des Wärmeübertrags sind in den Druckluftpassagen 60 und Kältefluidpassagen 61 jeweils Wärmeübertragungselemente 67 vorgesehen, die eine verbesserte Durchmischung der Druckluft bzw. des Kühlfluids bewirken und so den Wärmeübertrag zwischen den Druckluftpassagen und den Kältefluidpassagen verbessern. Vorliegend sind die Wärmeübertragungselemente 67 in Form von Wellbleche ausgeführt, welche eine Vielzahl von einzelnen Druckluftkanälen bzw. Kältefluidkanälen definieren. Die Wellbleche können zudem noch zur Vergrößerung der Oberfläche bzw. zur Erhöhung der Turbulenzen in den Druckluftkanälen bzw. Kältefluidkanälen Oberflächenvertiefungen, Bohrungen oder Profilierungen aufweisen.

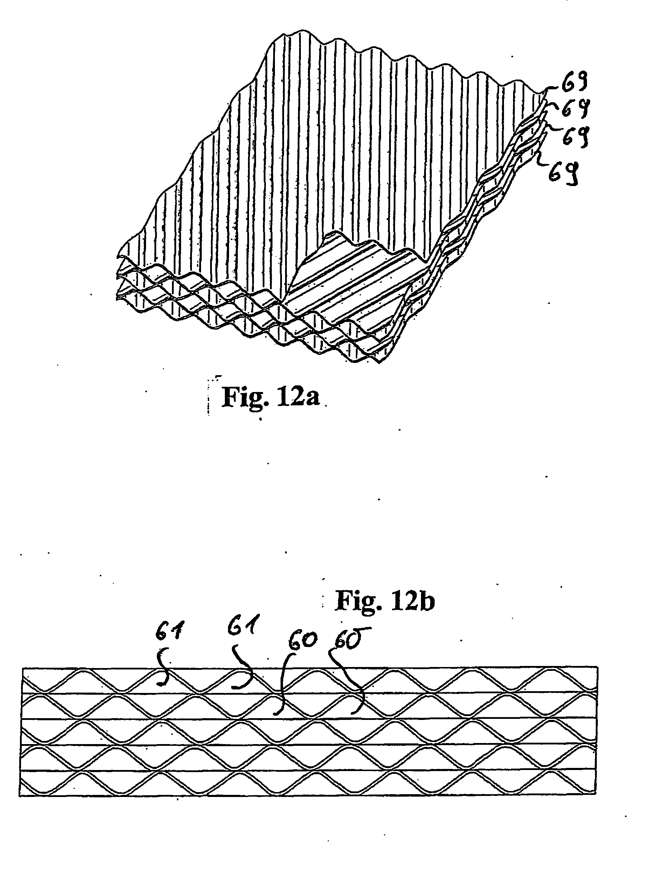

Figen. 12a und 12b zeigen eine Ausführungsform eines Platten-Wärmetauschers in zwei unterschiedlichen Teilschnittansichten. Der dargestellte Platten-Wärmetauscher entspricht hierbei weitgehend in seiner Funktion dem aus den Wärmeübertragungselementen 67 und Trennwandungen 66 bestehenden Block des druckluftseitigen Wärmetauschers 62 in den Fig. 11a und Fig. 11b. Im Gegensatz zu der Ausführungsform gemäß Fig. 11a und Fig. 11b umfasst der vorliegende Platten-Wärmetauscher jedoch lediglich eine Abfolge an aufeinanderliegenden Wellenformplatten 69, die direkt, etwa durch Löten oder Schweißen miteinander verbunden oder indirekt, beispielsweise durch Klemmung, gegeneinander fixiert sein können. Die Wellenformplatten 69 stellen dabei gleichzeitig die Trennwandungen dar, so dass auch hier eine alternierende Abfolge entweder von Kältefluid und Druckluft bzw. Kältefluid und Speichermedium gegeben sein kann. In Fig. 12b ist eine Schnittansicht durch einen solchermaßen gebildeten Druckfluid-Kältemittel-Wärmetauscher 30 dargestellt, so dass hier Druckluftpassage 60 und Kältefluidpassage 61 alternieren.

Die Wellenformplatten können, wie in Fig. 12a dargestellt, so aufeinandergestapelt werden, dass die jeweiligen Wellentäler bzw. Wellenberge der benachbarten Platten gekreuzt verlaufen, um so eine bessere Wärmeübertragung zu erzielen.

Mit der vorliegenden Erfindung wird eine einfache Leistungsregelung eines Primärkreislaufes für ein Kältefluid zur Abkühlung der Druckluft in einem Druckluftkältetrockner ermöglicht, wobei die Leistungsregelung durch An- und Abschaltung eines ungeregelten Kältemittelverdichters ggf. kombiniert mit dem Öffnen bzw. Schließen von ein oder mehreren Absperrorganen erfolgt.

Bei einem geregelten Kältemittelverdichter können die beschriebenen Ausführungsformen zur Abdeckung von Kälteleistungen unterhalb der unteren Grenze des Regelbereichs des Kältemittelverdichters eingesetzt werden.

Als Kriterien für das An- bzw. Abschalten des Kältemittelverdichters können beispielsweise die Werte folgender Größen verwendet werden:
- Ansaugdruck/Verdampfungsdruck
- Temperatur im Kältespeicher
- Temperatur im Druckfluid-Kältemittel-Wärmetauscher bzw. in der Druckluft, insbesondere am Drucklufteintritt und/oder Druckluftaustritt
- Drucktaupunkt der Druckluft.

Diese Größen können auch in zeitlich fester oder vom Betriebszustand abhängiger Kombination ausgewertet und für die Ansteuerung des bzw. der Verdichter verwendet werden.

Auch bei einer gestuften Verringerung des Kältefluidmassenstroms zum Beispiel bei einem Kältemittelverdichterverbund oder Einzelkolbenabschaltung können die beschriebenen Varianten vorteilhaft eingesetzt werden, um bei Teillastzuständen zwischen den Stufen eine angepasste Kühlleistung zur Verfügung zu stellen. Bei abgekühltem Kältespeicher und niedrigem Kältemittelmassenstrom wird durch Kondensation im Speicherbereich zusätzliches flüssiges Kältemittel für die Kühlung zur Verfügung gestellt. Bei der Ausführungsform nach Fig. 5 muss dazu ein Kreislauf zwischen Kältespeicher 13 und Druckfluid-Kältemittel-Wärmetauscher 30 durch die Öffnung zweier Kreislaufventile 39, 40 freigegeben werden.

Mit der vorliegenden Erfindung wird auch die Möglichkeit einer räumlichen Trennung des Speichermediums vom Druckfluid-Kältemittel-Wärmetauscher geschaffen, so dass neue und vorteilhafte Bauformen für Kältetrockner möglich werden, mit denen auch Kältespeicher großer Kapazität kostengünstig realisiert werden können.

### Bezugszeichenliste

- 11: Kältetrockner
- 12: Gemeinsames Bauteil
- 13: Kältespeicher
- 14: Kältespeichermedium
- 15: Entladungskreislauf
- 16: Primärkreislauf
- 17: Kältefluidkanäle
- 18: Druckluftkanäle
- 19: Kammern (für Kältespeichermedien)
- 20: Speicherseitiger Wärmetauscher
- 21: Drucklufteintritt
- 22: Druckluftaustritt
- 23: Kondensatabscheider
- 24: Kältemittelverdichter
- 25: Verflüssiger
- 26, 26': Expansionsorgan
- 27: Kältefluideingang
- 28: Kältefluidausgang
- 29: Verdampfungsdruckregler
- 30: Druckfluid-Kältemittel-Wärmetauscher
- 31: Unterer Anschluss (speicherseitiger Wärmetauscher)
- 33: Oberer Anschluss (speicherseitiger Wärmetauscher)
- 35, 35': Ventil
- 36: Einstellorgane
- 37: Startregler
- 38: Rückschlagventil
- 39, 40: Kreislaufventile
- 41: druckluftseitiger Strang
- 42: speicherseitiger Strang
- 43: Aufladungskältemittelweg
- 44: Entladungskältemittelweg
- 45: Kältemittelsammler
- 46: Kältefluidleitung
- 47: Absperrorgan
- 48: Belade-Wärmetauscher
- 49: Luft-Luft-Wärmetauscher
- 50: Sammelkasten
- 51: Öffnungen
- 52: Primärkreislauf-Transfer-Wärmetauscher
- 53: Transferkreislauf
- 54: Transferfluid
- 56: druckluftseitiger Wärmetauscher
- 57: Transferfluidreservoir
- 58: Drucklufteinlaß
- 59: Drucklufteintritt
- 60: Druckluftpassage
- 61: Kältefluidpassage
- 62: druckluftseitiger Wärmetauscher
- 63: Trennplatte
- 64: kältespeicherseitiger Wärmetauscher
- 66: Trennwandungen
- 67: Wärmeübertragungselemente
- 68: Wellenformplatten
- 69: druckgesteuertes, elektronisches Expansionsventil

## Patentansprüche

1. Kältetrockner, insbesondere Druckluftkältetrockner, zur Trocknung eines gasförmigen Fluids unter Abkühlung des gasförmigen Fluids durch Einsatz eines Kältefluids, umfassend
- einen Druckfluid-Kältemittel-Wärmetauscher (30), in dem mittelbar oder unmittelbar eine Abkühlung des gasförmigen Fluids durch ein in einem Primärkreislauf (16) geführtes Kältefluid erfolgt,
- einen oder mehrere Kältemittelverdichter (24) zum Betrieb des Primärkreislaufs, sowie
- einen Kältespeicher (13) mit einem weiteren, nämlich dem speicherseitigen, Wärmetauscher (20) für den Wärmeaustausch zwischen einem Speicherentladefluid, welches gleichzeitig das Kältemittel sein kann, und einem Kältespeichermedium (14),
wobei Druckfluid-Kältemittel-Wärmetauscher (30) und Kältespeicher (13) über einen Entladungskreislauf (15) für des Speicherentladefluid in Fluidverbindung stehen oder in Fluidverbindung gebracht werden können, derart dass Speicherentladefluid mit erhöhtem Wärmeinhalt über den Entladungskreislauf (15) zur Wärmeabgabe an den Kältespeicher (13) geführt wird, dort Wärme abgibt und anschießend unter verringertem Wärmeinhalt wieder an den Druckfluid-Kältemittel-Wärmetauscher (30) geführt wird,
**dadurch gekennzeichnet, dass**
die Anordnung so getroffen und das Speicherentladefluid so ausgewählt ist, dass das Speicherentladefluid in einem Speicherentladungsbetrieb unter Abgabe von Wärme an den Lältespeicher (13) kondensiert und unter Aufnahme von Wärme im Druckfluid-Kältemittel-Wärmetauscher (30) verdampft, um so durch natürliche konvektion den Entladungskreislauf anzutreiben.

2. Kältetrockner nach Anspruch 1,
**dadurch gekennzeichnet,**
**dass** der Entladungskreislauf
durch Antriebsmittel, wie eine Pumpe, zusätzlich angetrieben wird.

3. Kältetrockner nach einem der Ansprüche 1 oder 2,
**dadurch gekennzeichnet,**
**dass** der Entladungskreislauf (15) im Wesentlichen nur in den Betriebsphasen aktiv ist, in denen der oder die Kältemittelverdichter (24) ausgeschaltet sind oder mit verminderter Leistung betrieben werden.

4. Kältetrockner nach einem der Ansprüche 1 bis 3,
**dadurch gekennzeichnet,**
**dass** Primärkreislauf (16) und Entladungskreislauf (15) miteinander, insbesondere innerhalb des Druckfluid-Kältemittel-Wärmetauscher (30), zumindest fallweise in Fluidverbindung stehen, so dass das Speicherentladefluid des Entladungskreislaufs (15) und das Kältefluid des Primärkreislaufs (16) durch das gleiche Kühlfluid gebildet sind.

5. Kältetrockner nach Anspruch 4,
**dadurch gekennzeichnet**,
das sich der Entladungskreislauf (15) fallweise in Teilen des Primärkreislaufes (16) ausbildet und somit durch die Strömungskanäle des Primärkreislaufs begrenzt ist.

6. Kältetrockner nach einem der Ansprüche 1 bis 3,
**dadurch gekennzeichnet,**
**dass** Primärkreislauf (16) und Entladungskreislauf (15) als voneinander fluidtechnisch getrennte Kreisläufe ausgebildet sind und über einen Primärkreislauf- Transfer-Wärmetauscher (52) miteinander in thermischer Wechselwirkung stehen.

7. Kältetrockner nach einem der Ansprüche 1 bis 6,
**dadurch gekennzeichnet,**
**dass** der Kältespeicher (13) vom Druckfluid-Kältemittel-Wärmetauscher (30) räumlich getrennt ist.

8. Kältetrockner nach einem der Ansprüche 1 bis 7,
**dadurch gekennzeichnet,**
**dass** der speicherseitige Wärmetauscher (20) und der Druckfluid-Kältemittel-Wärmetauscher (30) in einem gemeinsamen Bauteil (12) integriert sind.

9. Kältetrockner nach einem der Ansprüche 1 bis 8,
wobei das gasförmige Fluid in Strömungsrichtung vor und nach dem Druckfluid-Kältemittel-Wärmetauscher (30) einen Luft-Luft-Wärmetauscher (49) durchströmt derart, dass das im Druckfluid-Kältemittel-Wärmetauscher (30) abgekühlte gasförmige Fluid das in den Druckfluid-Kältemittel-Wärmetauscher (30) einströmende gasförmige Fluid vorkühlt, wobei der Druckfluid-Kältemittel-Wärmetauscher (30) und der Luft-Luft-Wärmetauscher (49) in einem gemeinsamen Bauteil integriert sind, wobei der speicherseitige Wärmetauscher (20) als separates, getrenntes Bauteil oder zusammen mit dem Luft-Luft-Wärmetauscher (49) und dem Druckfluid-Kältemittel-Wärmetauscher (30) in einem gemeinsamen Bauteil realisiert ist.

10. Kältetrockner nach einem der Ansprüche 1 bis 9,
**dadurch gekennzeichnet,**
**dass** dem Kältespeicher (13) über den speicherseitigen Wärmetauscher (20) oder einen separaten Belade-Wärmetauscher (48) in einem Beladezustand durch ein Speicherbeladefluid, das mit dem Speicherentladefluid identisch sein oder separat vorliegen kann, Wärme entzogen wird.

11. Kältetrockner nach einem der Ansprüche 1 bis 10,
**dadurch gekennzeichnet,**
**dass** der Kältespeicher (13) im Beladezustand über den speicherseitigen Wärmetauscher (20) und/oder einen separaten Belade-Wärmetauscher (48) mit dem Kältefluid des Primärkreislaufes (16) zur Verringerung des Wärmeinhalts des Kältespeichermediums (14) in Wirkverbindung steht.

12. Kältetrockner nach einem der Ansprüche 1 bis 11,
**dadurch gekennzeichnet,**
**dass** die Wärmekapazität des Kältespeichers (13) bzw. des Kältespeichermediums (14) **dadurch** erhöht ist, dass das Kältespeichermedium (14) in seinem Arbeitsbereich einen Phasenübergang vollzieht.

13. Kältetrockner nach einem der Ansprüche 1 bis 12,
**dadurch gekennzeichnet,**
**dass** das Kältespeichermedium (14) so ausgewählt ist, dass sein Arbeitsbereich zwischen -8° bis 4° Celsius, vorzugsweise um etwa 2° Celsius für Bauformen, bei denen der speicherseitige Wärmetauscher (20) und der Druckfluid-Kältemittel-Wärmetauscher (30) in einem gemeinsamen Bauteil (12) integriert sind bzw. um etwa -3°Celsius für Bauformen, in denen der Kältespeicher (13) vom Druckfluid-Kältemittel-Wärmetauscher (30) räumlich getrennt ist, liegt.

14. Kältetrockner nach einem der Ansprüche 1 bis 13,
**dadurch gekennzeichnet,**
**dass** am speicherseitigen Wärmetauscher (20) und/oder am ggf. zusätzlich vorgesehenen Belade-Wärmetauscher (48) des Kältespeichers (13) und/oder im Kältespeicher (13) selbst Mittel zur Erhöhung der Wärmeleitfähigkeit vorgesehen sind, um eine möglichst effiziente Ankopplung des Speicherentlade- und/oder Speicherbeladefluids an das Kältespeichermedium (14) des Kältespeichers (13) zu bewirken.

15. Kältetrockner nach Anspruch 14,
**dadurch gekennzeichnet,**
**dass** die Mittel zur Erhöhung der Wärmeleitfähigkeit im Kältespeicher (13) **dadurch** gebildet sind, dass Stoffe, Partikel oder Fasern mit hoher Wärmeleitfähigkeit im Kältespeichermedium zur Verbesserung der effektiven Wärmeleitfähigkeit im Kältespeichermedium eingelagert sind.

16. Kältetrockner nach einem der Ansprüche 1 bis 15,
**dadurch gekennzeichnet,**
**dass** im Primärkreislauf (16) abschnittsweise eine Aufspaltung der Führung des Kältefluids in zwei parallel geführte Stränge, nämlich in einen druckluftseitigen Strang (41) und einen speicherseitigen Strang (42), vorgesehen ist, wobei der druckluftseitige Strang (41) über den Druckfluid-Kältemittel-Wärmetauscher (30) und der speicherseitige Strang (42) über den Kältespeicher (13) geführt sind.

17. Kältetrockner nach Anspruch 16,
**dadurch gekennzeichnet,**
**dass** dem druckluftseitigen Strang (41) und dem speicherseitigen Strang (42) jeweils ein separates Expansionsorgan (26, 26') und/oder entsprechende Einstellorgane (36) zur Erzielung unterschiedlicher Verdampfungsdrücke zugeordnet ist.

18. Kältetrockner nach einem der vorhergehenden Ansprüche,
**dadurch gekennzeichnet,**
**dass** zur Verringerung des Wärmeinhalts des Kältespeichers (13) durch das Kältefluid des Primärkreislaufs (16) teilweise oder ausschließlich die Strömungswege des Entladungskreislaufs (15) Verwendung finden.

19. Kältetrockner nach einem der Ansprüche 8 bis 18,
**dadurch gekennzeichnet,**
**dass** durchgehende Kältefluidkanäle (17) Abschnitte des Entladungskreislaufes (15) bilden und sich zumindest im Wesentlichen über die gesamte Höhe des aus dem speicherseitigen Wärmetauscher (20) und dem Druckfluid-Kältemittel-Wärmetauscher (30) gebildeten gemeinsamen Bauteil (12) erstrecken.

20. Kältetrockner nach Anspruch 19,
**dadurch gekennzeichnet,**
**dass** im Entladezustand der Entladungskreislauf innerhalb der Kältefluidkanäle (17) im Druckfluid-Kälte-Wärmetauscher (30) dergestalt hervorgerufen wird, dass das Kältefluid im unteren Bereich der Kältefluidkanäle (17) durch das zu kühlende gasförmige Fluid in den Druckluftkanälen (18) Wärme aufnimmt, verdampft dieses Kältefluid mit erhöhtem Wärmeinhalt in Richtung zum Kältespeicher (13) aufsteigt, dort Wärme abgibt und kondensiert und nach Wärmeabgabe innerhalb der Kältekanäle (17), insbesondere schwerkraftbedingt, wieder nach unter sackt, um dort erneut gasförmiges Fluid in den Druckluftkanälen (18) abzukühlen.

21. Kältetrockner nach Anspruch 19 oder 20,
**dadurch gekennzeichnet,**
**dass** das Kältespeichermedium (14) in einer Mehrzahl abgeschlossener Kammern (19) separat untergebracht ist, die als jeweils endseitig verschlossene Kanalabschnitte ausgebildet sind, oder die Mehrzahl von Kammern (19) über mindestens einen endseitig angeordneten Sammelkasten (50), der vorzugsweise ein oder mehrere Öffnungen (51) zur Befüllung bzw. Entleerung umfasst, miteinander in Fluidverbindung steht.

22. Kältetrockner nach einem der Ansprüche 19 bis 21,
**dadurch gekennzeichnet, dass** das den speicherseitigen Wärmetauscher (20) und den Druckfluid-Kältemittel-Wärmetauscher (30) umfassende gemeinsame Bauteil (12) als Plattenwärmetauscher oder als Aluminium-Block-Wärmetauscher ausgebildet ist.

23. Verfahren zur Kältetrocknung eines gasförmigen Fluids in einem Kältetrockner, wobei der Kältetrockner umfasst:
- einen Druckfluid-Kältemittel-Wärmetauscher (30), in dem mittelbar oder unmittelbar eine Abkühlung des gasförmigen Fluids durch ein in einem Primärkreislauf (16) geführtes Kältefluid erfolgt,
- einen oder mehrere Kältemittelverdichter (24) zum Betrieb des Primärkreislaufs sowie
- einen Kältespeicher (13), mit einem weiteren, nämlich dem speicherseitigen, Wärmetauscher (20) für den Wärmeaustausch zwischen einem Speicherentladefluid und einem Kältespeichermedium (14), mit folgenden Schritten:
- Verringerung des Wärmeinhalts des Kältespeichers (13) über überschüssige Kühlleistung des Kältefluids des Primärkreislaufes in Betriebszuständen, in denen die Abkühlung des gasförmigen Fluids keine oder nur einen Bruchteil der vorhandenen Kühlleistung erfordert und
- Entladen des Kältespeichers (13) und Abkühlen des gasförmigen Fluids durch das Speicherentladefluid über einen Wärme- bzw. Kältetransport zwischen Druckfluid-Kältemittel-Wärmetauscher (30) und Kältespeicher (13) in Betriebszuständen, in denen die Abkühlung des gasförmigen Fluids nicht oder nur zum Teil aus der Kühlleistung des Primärkreislaufes bewirkt wird, **dadurch gekennzeichnet, dass** das Speicherenladefliud bei seinem - ggf. durch Regelorgane beeinflussten - Umlauf zyklische Phasenübergänge zwischen flüssig und dampfförmig auf im Wesentlichen gleichem Druckniveau erfährt, um in den Betriebszuständen, in denen die Abkühlung des gasförmigen Fluids nicht oder nur zum Teil aus der Kühlleistung des Primärkreislaufes bewirkt wird, das Speicherentladefluid durch natürliche konvektion zu zirkulieren.

24. Verfahren nach Anspruch 23,
**dadurch gekennzeichnet,**
**dass** bei Unterbrechung bzw. Abschaltung bzw. gestufter oder kontinuierlicher Leistungsreduktion des Primärkreislaufes eine Kühlung des gasförmigen Fluids ausschließlich oder teilweise durch den Kältespeicher bewirkt wird, wobei der konvektive Wärme- bzw. Kältetransport zwischen Kältespeicher (13) und Druckfluid-Kältemittel-Wärmetauscher automatisch einsetzt oder, insbesondere durch Ventile, geregelt oder gesteuert wird.

## Claims

1. Refrigerant dryer, e.g. a compressed air refrigerant dryer, for drying a gaseous fluid while cooling the gaseous fluid using a refrigerant, comprising
- a pressure fluid-refrigerant agent-heat exchanger (30) in which a cooling of the gaseous fluid takes place directly or indirectly by a refrigerant conveyed in a primary loop (16),
- one or more refrigerant compressor(s) (24) for operating the primary loop, and
- a cold accumulator (13) with a further, namely accumulator-side heat exchanger (20) for a heat exchange between an accumulator discharge fluid, which can be the refrigerant at the same time, and a cold accumulator medium (14),
wherein the pressure fluid-refrigerant agent-heat exchanger (30) and cold accumulator (13) are fluidically connected or may be brought into fluidic connection via a discharge loop (15) for the accumulator discharge fluid in such a manner that the accumulator discharge fluid having an increased heat content is conveyed through the discharge loop (15) for heat emission to the cold accumulator (13), emits heat there, and subsequently, having a reduced heat content, is again conveyed to the pressure fluid-refrigerant agent-heat exchanger (30),
**characterized in that**
the arrangement is configured and the accumulator discharge fluid is selected such that the accumulator discharge fluid in an accumulator discharge operation condenses while emitting heat to the cold accumulator (13) and evaporates in the pressure fluid-refrigerant agent-heat exchanger (30) while absorbing heat so as to drive the discharge loop by natural convection.

2. Refrigerant dryer according to claim 1,
**characterized in that**
the discharge loop is additionally driven by a drive means such as a pump.

3. Refrigerant dryer according to any one of claims 1 or 2,
**characterized in that**
the discharge loop (15) is essentially only active during the operating phases in which the refrigerant compressor(s) (24) is/are switched off or is/are driven at a reduced power.

4. Refrigerant dryer according to any one of claims 1 to 3,
**characterized in that**
the primary loop (16) and the discharge loop (15) are in fluidic connection at least in case to case, e.g. within the pressure fluid-refrigerant agent-heat exchanger (30) so that the accumulator discharge fluid of the discharge loop (15) and the refrigerant of the primary loop (16) are formed by the same refrigerant.

5. Refrigerant dryer according to claim 4,
**characterized in that**
the discharge loop (15) forms in parts of the primary loop (16) from case to case and is thus delimited by the flow ducts of the primary loop.

6. Refrigerant dryer according to any one of claims 1 to 3,
**characterized in that**
the primary loop (16) and the discharge loop (15) are configured as loops which in terms of fluid technology are separated from each other and are in thermal interaction with each other through a primary loop-transfer-heat exchanger (52).

7. Refrigerant dryer according to any one of claims 1 to 6,
**characterized in that**
the cold accumulator (13) is spatially separated from the pressure fluid-refrigerant agent-heat exchanger (30).

8. Refrigerant dryer according to any one of claims 1 to 7,
**characterized in that**
the accumulator-side heat exchanger (20) and the pressure fluid-refrigerant agent-heat exchanger (30) are integrated into one common component (12).

9. Refrigerant dryer according to any one of claims 1 to 8,
wherein the gaseous fluid flows in the direction of flow through an air-air-heat exchanger (49) upstream and downstream of the pressure fluid-refrigerant agent-heat exchanger (30) in such a manner that the gaseous fluid cooled down in the pressure fluid-refrigerant agent-heat exchanger (30) pre-cools the gaseous fluid flowing into the pressure fluid-refrigerant agent-heat exchanger (30), wherein the pressure fluid-refrigerant agent-heat exchanger (30) and the air-air-heat exchanger (49) are integrated into one common component, wherein the accumulator-side heat exchanger (20) is realized as a separate individual component or is integrated into one common component together with the air-air-heat exchanger (49) and the pressure fluid-refrigerant agent-heat exchanger (30).

10. Refrigerant dryer according to any one of claims 1 to 9,
**characterized in that**
heat is extracted from the cold accumulator (13) in a charge state by means of an accumulator-side heat exchanger (20) or a separate loading heat exchanger (48) by an accumulator charging fluid which may be identical to or separate from the accumulator discharge fluid.

11. Refrigerant dryer according to any one of claims 1 to 10,
**characterized in that**,
in the charge state, the cold accumulator (13) is in operative connection with the refrigerant of the primary loop (16) through the accumulator-side heat exchanger (20) and/or a separate loading heat exchanger (48) for reducing the heat content of the cold accumulator medium (14).

12. Refrigerant dryer according to any one of claims 1 to 11,
**characterized in that**
the thermal capacity of the cold accumulator (13) or the cold accumulator medium (14) is increased **in that** the cold accumulator medium (14) performs a phase transition in its operating range.

13. Refrigerant dryer according to any one of claims 1 to 12,
**characterized in that**
the cold accumulator medium (14) is selected such that its operating range is between -8°C and 4°C, preferably about 2°C for structural configurations in which the accumulator-side heat exchanger (20) and the pressure fluid-refrigerant agent-heat exchanger (30) are integrated into one common component (12), or about -3°C for structural configurations in which the cold accumulator (13) is spatially separated from the pressure fluid-refrigerant agent-heat exchanger (30).

14. Refrigerant dryer according to any one of claims 1 to 13,
**characterized in that**
means for increasing the thermal conductivity are provided on the accumulator-side heat exchanger (20) and/or on the conceivably additionally provided loading heat exchanger (48) of the cold accumulator (13) and/or in the cold accumulator (13) itself in order to effect the most efficient coupling possible of the accumulator discharge fluid and/or the accumulator charge fluid with the cold accumulator medium (14) of the cold accumulator (13).

15. Refrigerant dryer according to claim 14,
**characterized in that**
the means for increasing the thermal conductivity in the cold accumulator (13) are formed **in that** substances, particles or fibers having high thermal conductivity are incorporated in the cold accumulator medium for improving the effective thermal conductivity in the cold accumulator medium.

16. Refrigerant dryer according to any one of claims 1 to 15,
**characterized in that**
it is provided to split the refrigerant guide into sections of two parallel tracks in the primary loop (16), namely a compressed air-side track (41) and an accumulator-side track (42), wherein the compressed air-side track (41) is guided across the pressure fluid-refrigerant agent-heat exchanger (30) and the accumulator-side track (42) is guided across the cold accumulator (13).

17. Refrigerant dryer according to claim 16,
**characterized in that** a separate expansion element (26, 26') and/or similar adjustment elements (36) is/are respectively allocated to the compressed air-side track (41) and the accumulator-side track (42) to achieve different evaporation pressures.

18. Refrigerant dryer according to any one of the preceding claims,
**characterized in that**
the flow paths of the discharge loop (15) are partially or exclusively used for reducing the heat content of the cold accumulator (13) by the refrigerant of the primary loop (16).

19. Refrigerant dryer according to any one of claims 8 to 18,
**characterized in that**
continuous refrigerant ducts (17) constitute sections of the discharge loop (15) and extend at least substantially over the entire height of the common component (12) formed by the accumulator-side heat exchanger (20) and the pressure fluid-refrigerant agent-heat exchanger (30).

20. Refrigerant dryer according to claim 19,
**characterized in that**
in the discharge state, the discharge loop is created within the refrigerant ducts (17) in the pressure fluid-refrigerant agent-heat exchanger (30) so that the refrigerant absorbs heat in the lower area of the refrigerant ducts (17) by the gaseous fluid to be cooled in the compressed air ducts, the refrigerant evaporates and rises toward the cold accumulator (13) with an increased heat content, emits heat there and condenses, and then descends again, in particular under the influence of gravity, after heat emission within the cold-conducting ducts (17) in order to again cool the gaseous fluid there in the compressed air ducts (18).

21. Refrigerant dryer according to claim 19 or 20,
**characterized in that**
the cold accumulator medium (14) is separately accommodated within a plurality of sealed chambers (19) which are each formed to be terminally closed duct portions, or the plurality of chambers (19) are fluidically connected to each other by means of at least one terminally arranged collecting vessel (50) which preferably includes one or more opening(s) (51) for filling and emptying respectively.

22. Refrigerant dryer according to any one of claims 19 to 21,
**characterized in that**
the common component (12) comprising the accumulator-side heat exchanger (20) and the pressure fluid-refrigerant agent-heat exchanger (30) is formed to be a plate-type heat exchanger or an aluminum block-type heat exchanger.

23. Method for cold-drying a gaseous fluid in a refrigerant dryer, wherein the refrigerant dryer comprises:
- a pressure fluid-refrigerant agent-heat exchanger (30) in which a cooling of the gaseous fluid takes place directly or indirectly by a refrigerant conveyed in a primary loop (16),
- one or more refrigerant compressor(s) (24) for operating the primary loop, and
- a cold accumulator (13) with a further, namely accumulator-side heat exchanger (20) for the heat exchange between an accumulator discharge fluid and a cold accumulator medium (14),
comprising the following steps:
- reducing the heat content of the cold accumulator (13) by means of excess cooling capacity of the refrigerant of the primary loop in operating states in which the cooling of the gaseous fluid does not require any or only a fraction of the available cooling capacity, and
- discharging the cold accumulator (13) and cooling the gaseous fluid using the accumulator discharge fluid by means of a heat or cold transfer between the pressure fluid-refrigerant agent-heat exchanger (30) and cold accumulator (13) in operating states in which the cooling of the gaseous fluid is not or is only partially caused by the cooling capacity of the primary loop, **characterized in that** during the circulation of the accumulator discharge fluid, it is subjected - if necessary influenced by control elements - to cyclic phase transitions between liquid and vapor at a substantially equal pressure level so as to circulate the accumulator discharge fluid in operating states in which the cooling of the gaseous fluid is not or is only partially caused by the cooling capacity of the primary loop by natural convection.

24. Method according to claim 23,
**characterized in that**
the cooling of the gaseous fluid is effected exclusively or partially by the cold accumulator upon interruption or switching off or a stepped or continuous power reduction of the primary loop, wherein the convective heat or cold transfer between the cold accumulator (13) and the pressure fluid-refrigerant agent-heat exchanger starts automatically or is regulated or controlled, e.g. by valves.

## Revendications

1. Sécheur par réfrigération, en particulier sécheur par réfrigération pour air comprimé, destiné à sécher un fluide gazeux moyennant refroidissement du fluide gazeux sous l'action d'un fluide réfrigérant, comportant :
- un échangeur de chaleur fluide sous pression / agent réfrigérant (30) dans lequel se produit directement ou indirectement un refroidissement du fluide gazeux via un fluide réfrigérant conduit dans un circuit primaire (16),
- un ou plusieurs compresseurs d'agent réfrigérant (24) pour le fonctionnement du circuit primaire, ainsi que
- un accumulateur de froid (13) doté d'un autre échangeur de chaleur (20), à savoir celui qui se trouve côté accumulateur, pour l'échange de chaleur entre un fluide de décharge d'accumulateur, lequel peut être en même temps l'agent réfrigérant, et un fluide d'accumulateur de froid (14),
l'échangeur de chaleur fluide sous pression / agent réfrigérant (30) et l'accumulateur de froid (13) étant en liaison fluidique ou pouvant être mis en liaison fluidique via un circuit de décharge (15) pour le fluide de décharge d'accumulateur de telle manière que du fluide de décharge d'accumulateur est amené à l'accumulateur de froid (13) avec une teneur accrue en chaleur via le circuit de décharge (15) en vue de restituer de la chaleur, y restitue de la chaleur et est ensuite ramené à l'échangeur de chaleur fluide sous pression / agent réfrigérant (30) avec une teneur réduite en chaleur,
**caractérisé en ce que**
la disposition est choisie et le fluide de décharge d'accumulateur est sélectionné de telle sorte que le fluide de décharge d'accumulateur se condense dans un fonctionnement de décharge d'accumulateur en restituant de la chaleur à l'accumulateur de froid (13) et s'évapore en absorbant de la chaleur dans l'échangeur de chaleur fluide sous pression /agent réfrigérant (30) pour entraîner ainsi le circuit de décharge par convection naturelle.

2. Sécheur par réfrigération selon la revendication 1,
**caractérisé en ce que**
le circuit de décharge est en outre entraîné par des moyens d'entraînement, comme une pompe.

3. Sécheur par réfrigération selon l'une des revendications 1 ou 2,
**caractérisé en ce que**
le circuit de décharge (15) n'est essentiellement actif que dans les phases de fonctionnement dans lesquelles le ou les compresseurs d'agent réfrigérant (24) sont éteints ou fonctionnent à puissance réduite.

4. Sécheur par réfrigération selon l'une des revendications 1 à 3,
**caractérisé en ce que**
le circuit primaire (16) et le circuit de décharge (15) sont, du moins selon les cas, en liaison fluidique l'un avec l'autre, en particulier au sein de l'échangeur de chaleur fluide sous pression / agent réfrigérant (30), de sorte que le fluide de décharge d'accumulateur du circuit de décharge (15) et le fluide réfrigérant du circuit primaire (16) sont formés par le même fluide de refroidissement.

5. Sécheur par réfrigération selon la revendication 4,
**caractérisé en ce que**
le circuit de décharge (15) est constitué selon les cas dans des parties du circuit primaire (16) et est ainsi limité par les conduits d'écoulement du circuit primaire.

6. Sécheur par réfrigération selon l'une des revendications 1 à 3,
**caractérisé en ce que**
le circuit primaire (16) et le circuit de décharge (15) sont constitués comme circuits isolés l'un de l'autre du point de vue fluidique et sont en interaction thermique l'un avec l'autre via un échangeur de chaleur de transfert de circuit primaire (52).

7. Sécheur par réfrigération selon l'une des revendications 1 à 6,
**caractérisé en ce que**
l'accumulateur de froid (13) est spatialement isolé de l'échangeur de chaleur fluide sous pression / agent réfrigérant (30).

8. Sécheur par réfrigération selon l'une des revendications 1 à 7,
**caractérisé en ce que**
l'échangeur de chaleur côté accumulateur (20) et l'échangeur de chaleur fluide sous pression / agent réfrigérant (30) sont intégrés dans un composant commun (12).

9. Sécheur par réfrigération selon l'une des revendications 1 à 8,
où le fluide gazeux, avant et après l'échangeur de chaleur fluide sous pression / agent réfrigérant (30) dans le sens d'écoulement, traverse un échangeur de chaleur air / air (49) de telle manière que le fluide gazeux refroidi dans l'échangeur de chaleur fluide sous pression / agent réfrigérant (30) pré-refroidit le fluide gazeux qui entre dans l'échangeur de chaleur fluide sous pression / agent réfrigérant (30), l'échangeur de chaleur fluide sous pression / agent réfrigérant (30) et l'échangeur de chaleur air / air (49) étant intégrés dans un composant commun, l'échangeur de chaleur côté accumulateur (20) étant réalisé comme composant distinct et isolé ou dans un composant commun avec l'échangeur air / air (49) et l'échangeur de chaleur fluide sous pression / agent réfrigérant (30).

10. Sécheur par réfrigération selon l'une des revendications 1 à 9,
**caractérisé en ce que**
de la chaleur est soutirée de l'accumulateur de froid (13) via l'échangeur de chaleur côté accumulateur (20) ou un échangeur de chaleur de charge (48) distinct dans un état de charge via un fluide de charge d'accumulateur qui peut être identique au fluide de décharge d'accumulateur ou distinct.

11. Sécheur par réfrigération selon l'une des revendications 1 à 10,
**caractérisé en ce que**
dans l'état de charge, via l'échangeur de chaleur côté accumulateur (20) et/ou un échangeur de chaleur de charge (48) distinct, l'accumulateur de froid (13) est en liaison utile avec le fluide réfrigérant du circuit primaire (16) afin de réduire la teneur en chaleur du fluide d'accumulateur de froid (14).

12. Sécheur par réfrigération selon l'une des revendications 1 à 11,
**caractérisé en ce que**
la capacité de chaleur de l'accumulateur de froid (13) respectivement du fluide d'accumulateur de froid (14) est augmentée par le fait que le fluide d'accumulateur de froid (14) accomplit une transition de phase dans sa plage de travail.

13. Sécheur par réfrigération selon l'une des revendications 1 à 12,
**caractérisé en ce que**
le fluide d'accumulateur de froid (14) est sélectionné de telle manière que sa plage de travail est entre -8° et 4° Celsius, de préférence de l'ordre de 2° Celsius pour les formats pour lesquels l'échangeur de chaleur côté accumulateur (20) et l'échangeur de chaleur fluide sous pression / agent réfrigérant (30) sont intégrés dans un composant commun (12) et de l'ordre de -3° Celsius pour les formats dans lesquels l'accumulateur de froid (13) est spatialement isolé de l'échangeur de chaleur fluide sous pression /agent réfrigérant (30).

14. Sécheur par réfrigération selon l'une des revendications 1 à 13,
**caractérisé en ce que**
des moyens d'augmentation de la conductivité thermique sont prévus sur l'échangeur de chaleur côté accumulateur (20) et/ou sur l'échangeur de chaleur de charge (48) éventuellement prévu en plus pour l'accumulateur de froid (13) et/ou dans l'accumulateur de froid (13) lui-même, afin de générer un couplage le plus efficace possible du fluide de décharge et/ou de charge d'accumulateur avec le fluide d'accumulateur de froid (14) de l'accumulateur de froid (13).

15. Sécheur par réfrigération selon la revendication 14,
**caractérisé en ce que**
les moyens d'augmentation de la conductivité thermique dans l'accumulateur de froid (13) sont formés par le fait que des matières, particules ou fibres à conductivité thermique élevée sont logées dans le fluide d'accumulateur de froid pour améliorer la conductivité thermique effective dans le fluide d'accumulateur de froid.

16. Sécheur par réfrigération selon l'une des revendications 1 à 15,
**caractérisé en ce que**
une division du guidage du fluide réfrigérant en deux brins à tracé parallèle, à savoir en un brin côté air comprimé (41) et un brin côté accumulateur (42), est prévue par sections dans le circuit primaire (16), le brin côté air comprimé (41) passant par l'échangeur de chaleur fluide sous pression / agent réfrigérant (30) et le brin côté accumulateur (42) passant par l'accumulateur de froid (13).

17. Sécheur par réfrigération selon la revendication 16,
**caractérisé en ce que**
respectivement un organe d'expansion distinct (26, 26') et/ou des organes de réglage correspondants (36) est/sont affecté/s au brin côté air comprimé (41) et au brin côté accumulateur (42) afin d'obtenir des pressions d'évaporation différentes.

18. Sécheur par réfrigération selon l'une des revendications précédentes,
**caractérisé en ce que**
les voies d'écoulement du circuit de décharge (15) sont utilisées en partie ou exclusivement pour réduire la teneur en chaleur de l'accumulateur de froid (13) via le fluide réfrigérant du circuit primaire (16).

19. Sécheur par réfrigération selon l'une des revendications 8 à 18,
**caractérisé en ce que**
des conduits de fluide réfrigérant (17) traversants forment des tronçons du circuit de décharge (15) et s'étendent au moins essentiellement sur toute la hauteur du composant commun (12) formé de l'échangeur de chaleur côté accumulateur (20) et de l'échangeur de chaleur fluide sous pression /agent réfrigérant (30).

20. Sécheur par réfrigération selon la revendication 19,
**caractérisé en ce que**
dans l'état de décharge, le circuit de décharge est généré au sein des conduits de fluide réfrigérant (17) dans l'échangeur de chaleur fluide sous pression / agent réfrigérant (30) de telle façon que le fluide réfrigérant, dans la zone inférieure des conduits de fluide réfrigérant (17), absorbe de la chaleur (18) via le fluide gazeux à refroidir dans les conduits d'air , comprimé (18), que, sous forme évaporée, ce fluide réfrigérant ayant une teneur accrue en chaleur monte en direction de l'accumulateur de froid (13), y restitue de la chaleur et s'y condense et, après restitution de chaleur au sein des conduits de froid (17), retombe vers le bas, en particulier sous l'effet de la pesanteur, pour y refroidir de nouveau du fluide gazeux dans les conduits d'air comprimé (18).

21. Sécheur par réfrigération selon la revendication 19 ou 20,
**caractérisé en ce que**
le fluide d'accumulateur de froid (14) est logé distinctement dans une pluralité de chambres confinées (19) qui sont constituées comme tronçons de conduit fermés en extrémité, ou **en ce que** la pluralité de chambres (19) est en liaison fluidique l'une avec l'autre via au moins un caisson collecteur (50) disposé en extrémité, lequel comprend de préférence un ou plusieurs orifices (51) pour le remplissage ou le vidage.

22. Sécheur par réfrigération selon l'une des revendications 19 à 21,
**caractérisé en ce que** le composant commun (12) comprenant l'échangeur de chaleur côté accumulateur (20) et l'échangeur de chaleur fluide sous pression / agent réfrigérant (30) est constitué comme échangeur de chaleur à plaques ou comme échangeur de chaleur à bloc d'aluminium.

23. Procédé de séchage par réfrigération d'un fluide gazeux dans un sécheur par réfrigération, le sécheur par réfrigération comprenant :
- un échangeur de chaleur fluide sous pression / agent réfrigérant (30) dans lequel se produit directement ou indirectement un refroidissement du fluide gazeux via un fluide réfrigérant conduit dans un circuit primaire (16),
- un ou plusieurs compresseurs d'agent réfrigérant (24) pour le fonctionnement du circuit primaire, ainsi que
- un accumulateur de froid (13) doté d'un autre échangeur de chaleur (20), à savoir celui qui se trouve côté accumulateur, pour l'échange de chaleur entre un fluide de décharge d'accumulateur et un fluide d'accumulateur de froid (14),
comportant les étapes suivantes :
- réduction de la teneur en chaleur de l'accumulateur de froid (13) via le pouvoir réfrigérant excédentaire du fluide réfrigérant du circuit primaire dans des états de fonctionnement dans lesquels le refroidissement du fluide gazeux ne nécessite aucun pouvoir réfrigérant ou seulement une fraction du pouvoir réfrigérant existant et
- décharge de l'accumulateur de froid (13) et refroidissement du fluide gazeux par le fluide de décharge d'accumulateur via un transport de chaleur ou de froid entre l'échangeur de chaleur fluide sous pression /agent réfrigérant (30) et l'accumulateur de froid (13) dans des états de fonctionnement dans lesquels le refroidissement du fluide gazeux n'est pas ou seulement en partie généré à partir du pouvoir réfrigérant du circuit primaire,
**caractérisé en ce que** le fluide de décharge d'accumulateur subit, lors de sa circulation - éventuellement influencée par des organes de réglage -, des transitions de phase cycliques entre liquide et vapeur à niveau de pression essentiellement égal, pour faire circuler le fluide de décharge d'accumulateur par convection naturelle dans les états de fonctionnement dans lesquels le refroidissement du fluide gazeux n'est pas ou seulement en partie provoqué à partir du pouvoir réfrigérant du circuit primaire.

24. Procédé selon la revendication 23,
**caractérisé en ce que**
en cas d'interruption ou de coupure ou de réduction de puissance graduelle ou continue du circuit primaire, un refroidissement du fluide gazeux est généré exclusivement ou en partie par l'accumulateur de froid, le transport de chaleur ou de froid par convection entre l'accumulateur de froid (13) et l'échangeur de chaleur fluide sous pression / agent réfrigérant (30) s'opérant automatiquement, ou bien étant régulé ou commandé, en particulier par des vannes.
